(19) Europäisches Patentamt
European Patent Office
Office européen des brevets

(11) **EP 4 529 329 B1**

(12) **EUROPEAN PATENT SPECIFICATION**

(45) Date of publication and mention
of the grant of the patent:
**08.07.2026 Bulletin 2026/28**

(21) Application number: **23826101.0**

(22) Date of filing: **31.05.2023**

(51) International Patent Classification (IPC):
*H04W 72/12* (2023.01)    *H04L 27/26* (2006.01)

(52) Cooperative Patent Classification (CPC):
**G01S 7/006; H04B 1/525; H04L 27/2602;
H04L 27/2613**

(86) International application number:
**PCT/CN2023/097397**

(87) International publication number:
**WO 2023/246452 (28.12.2023 Gazette 2023/52)**

(54) **COMMUNICATION METHOD AND COMMUNICATION APPARATUS**

KOMMUNIKATIONSVERFAHREN UND KOMMUNIKATIONSVORRICHTUNG

PROCÉDÉ DE COMMUNICATION ET APPAREIL DE COMMUNICATION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **22.06.2022 CN 202210711188**

(43) Date of publication of application:
**26.03.2025 Bulletin 2025/13**

(73) Proprietor: **Huawei Technologies Co., Ltd.
Shenzhen, Guangdong 518129 (CN)**

(72) Inventors:
• **XUAN, Yidi
Shenzhen, Guangdong 518129 (CN)**
• **XIE, Xinqian
Shenzhen, Guangdong 518129 (CN)**
• **SHAO, Jiafeng
Shenzhen, Guangdong 518129 (CN)**
• **YE, Wei
Shenzhen, Guangdong 518129 (CN)**
• **LI, Hantao
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(56) References cited:
WO-A1-2021/130818    CN-A- 101 836 373
CN-A- 109 391 450    CN-A- 111 095 991
CN-A- 114 124 238    US-A1- 2013 115 966
US-A1- 2018 213 386

• DOKHANCHI SAYED HOSSEIN ET AL: "A half-duplex joint communications and sensing system using ZP-OFDM", 2022 2ND IEEE INTERNATIONAL SYMPOSIUM ON JOINT COMMUNICATIONS & SENSING (JC&S), IEEE, 9 March 2022 (2022-03-09), pages 1 - 6, XP034108805, DOI: 10.1109/JCS54387.2022.9743497
• LIU FAN ET AL: "Joint Radar and Communication Design: Applications, State-of-the-Art, and the Road Ahead", IEEE TRANSACTIONS ON COMMUNICATIONS, IEEE SERVICE CENTER, PISCATAWAY, NJ. USA, vol. 68, no. 6, 13 February 2020 (2020-02-13), pages 3834 - 3862, XP011793359, ISSN: 0090-6778, [retrieved on 20200616], DOI: 10.1109/TCOMM.2020.2973976

## Description

## TECHNICAL FIELD

This application relates to the field of communication technologies, and more specifically, to a communication method and a communication apparatus.

## BACKGROUND

Radar sensing, also referred to as radar detection, is widely applied to air and ground traffic monitoring, weather detection, security monitoring, electromagnetic imaging, and the like. As detection requirements increase, if a radar is independently used to perform detection with a wide coverage area, costs of the radar device are high, and especially in a continuous networking case, the costs of the radar device are doubled.

Considering that wireless communication has abundant spectrum resources, and has a large deployment scale and wide coverage, radar sensing and wireless communication may be integrated, so that both a wireless communication requirement and a detection requirement can be met. Currently, a signal in a wireless communication system is mainly used for communication. For an integrated sensing and communication system, how to design a sensing signal becomes an urgent problem to be resolved.

The document "A half-duplex joint communications and sensing system using ZP-OFDM" by S. H. Dokhanchi et al, IEEE Int. Symposium on Joint Communications and Sensing, March 2022, pp. 1 to 6, describes that, unlike with cyclic-prefix OFDM (CP-OFDM) radar, zeropadded OFDM (ZP-OFDM) does not need full duplexing as there is no self-interference during the guard interval (GI), which can be used for radar detection.
The document "Joint radar and communication design: Applications, state-of-the-art, and the road ahead" by F. Liu et al, IEEE Transactions on Communications, vol. 68, no. 6, Jun. 2020, pp. 3834 to 3862, describes a frame structure of a dual-functional radar-communication (DFRC) system, wherein a first pulse repetition interval comprises downlink pilots followed by a guard period, followed by uplink pilots, a subsequent second pulse repetition interval comprises downlink data followed by a guard period followed by uplink data, and a subsequent third pulse repetition interval comprises downlink data followed by a guard period followed by uplink data.

## SUMMARY

This application provides a communication method and apparatus, to implement integrated sensing and communication, and improve a detection range and performance of detecting a to-be-detected target.
The invention is defined by the independent claims. Advantageous embodiments of the invention are given by the dependent claims.

According to a first aspect, a communication method is provided. The method may be performed by a network device, or may be performed by a chip or a circuit disposed in the network device. This is not limited in this application.

The method includes: A first device determines a first time period, where the first time period includes a second time period, the second time period is used to send a first signal, a time domain length of the second time period is less than a time domain length of a time domain symbol, and a time period other than the second time period in the first time period is used to carry a zero power signal; and the first device sends the first signal in the second time period.

Based on the technical solution, because the time domain length of the second time period is less than a time domain length of a time domain symbol, the network device may send a sensing signal in the second time period in the first time period, but does not send the sensing signal in a time period other than the second time period in the first time period. In other words, a case that the network device sends a signal on a part of time domain resources in one time domain symbol, but does not send the signal on other time domain resources in the time domain symbol is limited in the solution. Therefore, the network device may receive the echo signal of the sensing signal on the time domain resource on which the signal is not sent, to detect a target. An advantage of this practice is that when antenna isolation of the network device is limited, the network device can avoid receive and transmit coupling interference caused by simultaneous receiving and sending (in other words, sending of a signal and receiving of a signal are simultaneously performed), to ensure that the network device normally sends the sensing signal. In addition, the second time period is less than a time domain length of a time domain symbol. This can ensure that a short-distance detection blind area caused because sending and receiving are not simultaneously performed is not excessively large.

According to a second aspect, a communication method is provided. The method may be performed by a second device (a sensed target) or performed by a chip or a circuit disposed in the second device. This is not limited in this application.

The method includes: A second device determines a first time period, where the first time period includes a second time period, the second time period is used to receive a first signal, a time domain length of the second time period is less than a time domain length of a time domain symbol, and a time period other than the second time period in the first time period is used to carry a zero power signal; and the second device receives the first signal in the second time period.

Based on the technical solution, because the time domain length of the second time period is less than a time domain length of a time domain symbol, the sensed target (the second device) may receive a sensing signal in the second time period in the first time period, but does not receive the sensing signal in a time period other than the second time period in the first time period. In other words, a case that a network device sends a signal on a part of time domain resources in one time domain symbol, but does not send the signal on other time domain resources in the time domain symbol is limited in the solution. Therefore, the network device may receive the echo signal of the sensing signal on the time domain resource on which the signal is not sent, to detect a target. An advantage of this practice is that when antenna isolation of the network device is limited, the network device can avoid receive and transmit coupling interference caused by simultaneous receiving and sending (in other words, sending of a signal and receiving of a signal are simultaneously performed), to ensure that the network device normally sends the sensing signal. In addition, the second time period is less than a time domain length of a time domain symbol. This can ensure that a short-distance detection blind area caused because sending and receiving are not simultaneously performed is not excessively large.

With reference to the first aspect and the second aspect, a time domain length of the first time period is equal to a time domain length of a time domain symbol.

With reference to the first aspect and the second aspect, in a possible implementation, the time domain length of the second time period is greater than or equal to a product of 1024 and a time domain length of a first time unit, and the time domain length of the second time period is less than or equal to a product of 4096 and the time domain length of the first time unit, where the time domain length of the first time unit is 1/(4096*480* 1000) second.

A longer time domain length for sending the first signal indicates stronger accumulated energy of the first signal in time domain and better sensing performance. However, a longer time domain length of the second time period indicates a larger short-distance detection blind area in a half-duplex mode. Therefore, a proper time domain length of the second time period is needed. Based on the technical solution, the time domain length of the second time period is limited, so that accumulated energy of the sensing signal in time domain meets a requirement of covering a coverage area, and it is ensured that the short-distance detection blind area is not excessively large.

With reference to the first aspect and the second aspect, in an implementation that is not according to the claims, a start time domain position of the second time period is the same as a start time domain position of the first time period.

In the technical solution, the start time domain position of the second time period is the same as the start time domain position of the first time period, and a coverage area of the first signal is larger.

With reference to the first aspect and the second aspect, a start time domain position of the second time period and a start time domain position of the first time period are separated by a third time period, and a time domain length of the third time period is greater than 0.

Based on the technical solution, when the first time period is one time domain symbol, there is a third time period in each time domain symbol. As a time interval before a sensing signal is sent in each time domain symbol, the third time period may be used to shield some interference when the first device receives a signal, for example, shield an echo signal with a short distance and strong interference. This helps improve detection performance.

With reference to the first aspect and the second aspect, in a possible implementation, the time domain length of the third time period is less than or equal to a product of 9959 and the time domain length of the first time unit; or the time domain length of the third time period is less than or equal to a product of 3404 and the time domain length of the first time unit; or the time domain length of the third time period is less than or equal to a product of 1356 and the time domain length of the first time unit, where the time domain length of the first time unit is 1/(4096*480* 1000) second.

Based on the technical solution, the time domain length of the third time period is limited. This can further ensure that the first signal has a sufficient sensing coverage area, and the blind area is not excessively large.

With reference to the first aspect and the second aspect, in a possible implementation, the first time period further includes a fourth time period, the fourth time period is used to receive a second signal, the second signal is an echo signal or a reflected signal of the first signal, and the second signal is used to sense a target.

In the technical solution, the first device sends the sensing signal in the second time period, and receives an echo signal of the sensing signal in the fourth time period. Therefore, a problem that simultaneously sending a signal and receiving a signal affect working of a sensing device in a full-duplex mode due to limited antenna isolation is avoided.

With reference to the first aspect and the second aspect, in a possible implementation, a start time domain position of the fourth time period is the same as an end position of the second time period.

With reference to the first aspect and the second aspect, in a possible implementation, a start time domain position of the fourth time period and an end position of the second time period are separated by a fifth time period.

In the technical solution, the fifth time period is a guard interval in time domain, or the fifth time period is used to map a zero power signal. In other words, the first device does not send a signal in the fifth time period. The first device performs switching between transmit and receive antennas in the guard interval. In the guard interval, a power of a power amplifier (power amplifier, PA) of a transmit link should be reduced to a tolerable level of a receiving device. Therefore, a problem that short-distance detection performance is affected because receive and transmit coupling interference caused by simultaneous receiving and sending (in other words, receiving of a signal and sending of a signal are simultaneously performed) exceeds a maximum level requirement of the receiving device is avoided.

According to a third aspect that is not according to the claims, a communication method is provided. The method may be performed by a network device or performed by a chip or a circuit disposed in the network device. This is not limited in this application.

The method includes: A first device determines a first time period, where the first time period includes a second time period and a third time period, the second time period is used to send a first signal, the third time period is used to send a second signal, the second time period and the third time period are not contiguous to each other, a time domain length of the second time period and/or a time domain length of the third time period are/is less than a time domain length of a time domain symbol, and a time period other than the second time period and the third time period in the first time period is used to carry a zero power signal; and the first device sends the first signal in the second time period, and sends the second signal in the third time period.

Based on the technical solution, a sensing signal in which half-duplex sensing and full-duplex sensing are alternate is used, the network device (the first device) sends the first signal in the second time period, and sends the second signal in the third time period, and the network device may provide a long-distance sensing capability in a half-duplex mode, and may also provide short-distance sensing coverage in a full-duplex mode. Especially in the full-duplex mode, short-distance sensing is mainly provided. Therefore, transmission may be performed at a low transmit power without being limited by antenna isolation, so that when the antenna isolation is limited, a detection range and performance of detecting a long-distance target are improved, and non-blind area detection is implemented.

According to a fourth aspect that is not according to the claims, a communication method is provided. The method may be performed by a second device (a sensed target) or performed by a chip or a circuit disposed in the second device. This is not limited in this application.

The method includes: determining a first time period, where the first time period includes a second time period and a third time period, the second time period is used to receive a first signal, the third time period is used to receive a second signal, the second time period and the third time period are not contiguous to each other, a time domain length of the second time period and/or a time domain length of the third time period are/is less than a time domain length of a time domain symbol, and a time period other than the second time period and the third time period in the first time period is used to carry a zero power signal; and receiving the first signal in the second time period, and receiving the second signal in the third time period.

Based on the technical solution, a sensing signal in which half-duplex sensing and full-duplex sensing are alternate is used, a long-distance sensing capability may be provided in a half-duplex mode, and short-distance sensing coverage may also be provided in a full-duplex mode. Especially in the full-duplex mode, short-distance sensing is mainly provided. Therefore, transmission may be performed at a low transmit power without being limited by antenna isolation, so that when the antenna isolation is limited, a detection range and performance of detecting a long-distance target are improved, and non-blind area detection is implemented.

With reference to the third aspect and the fourth aspect, in a possible implementation, a time domain length of the first time period is equal to a sum of time domain lengths of two time domain symbols.

With reference to the third aspect and the fourth aspect, in a possible implementation, the length of the third time period is greater than the length of the second time period, and the third time period is after the second time period in time domain.

With reference to the third aspect and the fourth aspect, in a possible implementation, the time domain length of the second time period is greater than or equal to a product of 1024 and a time domain length of a first time unit, and the time domain length of the second time period is less than or equal to a product of 4096 and the time domain length of the first time unit, where the time domain length of the first time unit is 1/(4096*480* 1000) second.

Based on the technical solution, a longer time domain length for sending the first signal indicates stronger accumulated energy of the first signal in time domain and better sensing performance. However, a longer time domain length of the second time period indicates a larger short-distance detection blind area in a half-duplex mode. Therefore, a proper time domain length of the second time period is needed. Based on the technical solution, the time domain length of the second time period is limited, so that accumulated energy of the sensing signal in time domain meets a requirement of covering a coverage area, and it is ensured that the short-distance detection blind area is not excessively large.

With reference to the third aspect and the fourth aspect, in a possible implementation, the time domain length of the third time period is equal to a product of 16384 and a time domain length of a first time unit, where the time domain length of the first time unit is 1/(4096*480* 1000) second.

Based on the technical solution, the time domain length of the third time period is limited. This can further ensure that the second signal can fully sense a short-distance target in a full-duplex mode, and a blind area range is reduced.

With reference to the third aspect and the fourth aspect, in a possible implementation, a start time domain position of the second time period is the same as a start time domain position of the first time period.

With reference to the third aspect and the fourth aspect, in a possible implementation, a start time domain position of the second time period and a start time domain position of the first time period are separated by a fourth time period, and a time domain length of the fourth time period is greater than 0.

Based on the technical solution, when the first time period is one time domain symbol, there is a fourth time period in each time domain symbol. As a time interval before a sensing signal is sent in each time domain symbol, the fourth time period may be used to shield some interference when the first device receives a signal, for example, shield an echo signal with a short distance and strong interference. This helps improve detection performance.

With reference to the third aspect and the fourth aspect, in a possible implementation, the length of the fourth time period is less than or equal to a product of 9959 and the time domain length of the first time unit; or the time domain length of the fourth time period is less than or equal to a product of 3404 and the time domain length of the first time unit; or the time domain length of the fourth time period is less than or equal to a product of 1356 and the time domain length of the first time unit, where the time domain length of the first time unit is $1/(4096*480*1000)$ second.

Based on the technical solution, the fourth time period is used to shield some interference when the first device receives a signal, for example, shield an echo signal with a short distance and strong interference. This helps improve detection performance.

With reference to the third aspect and the fourth aspect, in a possible implementation, a time domain interval between an end position of the second time period and a start time domain position of the third time period is greater than or equal to a product of 6554 and a time domain length of a first time unit, or the time domain interval between the end position of the second time period and the start time domain position of the third time period is greater than or equal to a product of 13108 and the time domain length of the first time unit, where the time domain length of the first time unit is $1/(4096*480*1000)$ second.

Based on the technical solution, the time domain length of the fourth time period is limited. This can further ensure that the first signal has a sufficient sensing coverage area, and the blind area is not excessively large.

With reference to the third aspect and the fourth aspect, in a possible implementation, the first signal presents an arrangement with an equal interval in frequency domain, the second signal presents an arrangement with an equal interval in frequency domain, and an interval in frequency domain of the first signal in the second time period is greater than an interval in frequency domain of the second signal in the third time period.

With reference to the third aspect and the fourth aspect, in a possible implementation, the first time period further includes a fifth time period, the fifth time period is used to receive a third signal, the third time period is used to receive a fourth signal, the third signal is an echo signal or a reflected signal of the first signal, the fourth signal is an echo signal or a reflected signal of the second signal, and the third signal and the fourth signal are used to sense a target.

In the technical solution, the first device sends the first signal in the second time period, and receives an echo signal of the first signal in the fourth time period, and the first device sends the second signal in the third time period and simultaneously receives an echo signal of the second signal, to implement half-duplex and full-duplex hybrid working, and the first device may provide a long-distance sensing capability in a half-duplex mode, and may also provide short-distance sensing coverage in a full-duplex mode. Especially in the full-duplex mode, short-distance sensing is mainly provided. Therefore, transmission may be performed at a low transmit power without being limited by antenna isolation, so that when the antenna isolation is limited, a detection range and performance of detecting a long-distance target are improved, and non-blind area detection is implemented.

With reference to the third aspect and the fourth aspect, in a possible implementation, a start time domain position of the fifth time period is the same as the end time domain position of the second time period, or the start time domain position of the fifth time period and the end time domain position of the second time period are separated by a sixth time period.

In the technical solution, the sixth time period is a guard interval in time domain, or the sixth time period is used to map a zero power signal. In other words, the first device does not send a signal in the sixth time period. The first device performs switching between transmit and receive antennas in the guard interval. In the guard interval, a power of a PA of a transmit link should be reduced to a tolerable level of a receiving device. Therefore, a problem that short-distance detection performance is affected because receive and transmit coupling interference caused by simultaneous receiving and sending (in other words, receiving of a signal and sending of a signal are simultaneously performed) exceeds a maximum level requirement of the receiving device is avoided.

With reference to the third aspect and the fourth aspect, in a possible implementation, the start time domain position of the third time period is the same as an end time domain position of the fifth time period, or the start time domain position of the third time period and the end time domain position of the fifth time period are separated by a seventh time period.

In a design of a mixed sensing signal, the seventh time period originally used to send a cyclic prefix is used as a guard interval. An advantage of this practice is that: when being switched from a half-duplex mode to a full-duplex mode, the network device needs to be switched from a receiving-only state to a simultaneous receiving and sending state. Therefore, the transmit link needs to be enabled (including enabling of a transmit antenna and enabling of the PA of the transmit link), so that the guard interval needs to be set. In the guard interval, the power of the PA of the transmit link may be increased to a required transmit power level.

With reference to the third aspect and the fourth aspect, in a possible implementation, the time domain length of the first time period is equal to a sum of time domain lengths of two time domain symbols.

According to a fifth aspect, a communication apparatus is provided. The apparatus may be implemented by a network device or a chip or a circuit disposed in the network device. This is not limited in this application.

The apparatus includes: a processing unit, configured to determine a first time period, where the first time period includes a second time period, the second time period is used to send a first signal, a time domain length of the second time period is less than a time domain length of a time domain symbol, and a time period other than the second time period in the first time period is used to carry a zero power signal; and a transceiver unit, configured to send the first signal in the second time period.

Based on the technical solution, because the time domain length of the second time period is less than a time domain length of a time domain symbol, the communication apparatus may send a sensing signal in the second time period in the first time period, but does not send the sensing signal in a time period other than the second time period in the first time period. In other words, a case that the network device sends a signal on a part of time domain resources in one time domain symbol, but does not send the signal on other time domain resources in the time domain symbol is limited in the solution. Therefore, the communication apparatus may receive an echo signal of the sensing signal on the time domain resource on which the signal is not sent, to detect a target. An advantage of this practice is that when antenna isolation of the communication apparatus is limited, the communication apparatus can avoid receive and transmit coupling interference caused by simultaneous receiving and sending (in other words, sending of a signal and receiving of a signal are simultaneously performed), to ensure that the communication apparatus normally sends the sensing signal. In addition, the second time period is less than a time domain length of a time domain symbol. This can ensure that a short-distance detection blind area caused because sending and receiving are not simultaneously performed is not excessively large.

According to a sixth aspect, a communication apparatus is provided. The apparatus includes: a processing unit, configured to determine a first time period, where the first time period includes a second time period, the second time period is used to receive a first signal, a time domain length of the second time period is less than a time domain length of a time domain symbol, and a time period other than the second time period in the first time period is used to carry a zero power signal; and a transceiver unit, configured to receive the first signal in the second time period.

Because the time domain length of the second time period is less than a time domain length of a time domain symbol, the communication apparatus may receive a sensing signal in the second time period in the first time period, but does not receive the sensing signal in a time period other than the second time period in the first time period. In other words, a case that the communication apparatus sends a signal on a part of time domain resources in one time domain symbol, but does not send the signal on other time domain resources in the time domain symbol is limited in the solution. Therefore, the communication apparatus may receive an echo signal of the sensing signal on the time domain resource on which the signal is not sent, to detect a target. An advantage of this practice is that when antenna isolation of the communication apparatus is limited, the communication apparatus can avoid receive and transmit coupling interference caused by simultaneous receiving and sending (in other words, sending of a signal and receiving of a signal are simultaneously performed), to ensure that the communication apparatus normally sends the sensing signal. In addition, the second time period is less than a time domain length of a time domain symbol. This can ensure that a short-distance detection blind area caused because sending and receiving are not simultaneously performed is not excessively large.

With reference to the fifth aspect and the sixth aspect, a time domain length of the first time period is equal to a time domain length of a time domain symbol.

With reference to the fifth aspect and the sixth aspect, in a possible implementation, the time domain length of the second time period is greater than or equal to a product of 1024 and a time domain length of a first time unit, and the time domain length of the second time period is less than or equal to a product of 4096 and the time domain length of the first time unit, where the time domain length of the first time unit is 1/(4096*480* 1000) second.

With reference to the fifth aspect and the sixth aspect, in an implementation that is not according to the claims, a start time domain position of the second time period is the same as a start time domain position of the first time period.

With reference to the fifth aspect and the sixth aspect, a start time domain position of the second time period and a start time domain position of the first time period are separated by a third time period, and a time domain length of the third time period is greater than 0.

With reference to the fifth aspect and the sixth aspect, in a possible implementation, the time domain length of the third time period is less than or equal to a product of 9959 and the time domain length of the first time unit; or the time domain length of the third time period is less than or equal to a product of 3404 and the time domain length of the first time unit; or the time domain length of the third time period is less than or equal to a product of 1356 and the time domain length of the first time unit, where the time domain length of the first time unit is 1/(4096*480* 1000) seconds.

With reference to the fifth aspect and the sixth aspect, in a possible implementation, the first time period further includes a fourth time period, the fourth time period is used to receive a second signal, the second signal is an echo signal or a reflected signal of the first signal, and the second signal is used to sense a target.

With reference to the fifth aspect and the sixth aspect, in a possible implementation, a start time domain position of the fourth time period is the same as an end position of the second time period, or the start time domain position of the fourth time period and the end position of the second time period are separated by a fifth time period.

According to a seventh aspect that is not according to the claims, a communication apparatus is provided. The apparatus may be implemented by a network device or a chip or a circuit disposed in the network device. This is not limited in this application.

The apparatus includes: a processing unit, configured to determine a first time period, where the first time period includes a second time period and a third time period, the second time period is used to send a first signal, the third time period is used to send a second signal, the second time period and the third time period are not contiguous to each other, a time domain length of the second time period and/or a time domain length of the third time period are/is less than a time domain length of a time domain symbol, and a time period other than the second time period and the third time period in the first time period is used to carry a zero power signal; and a transceiver unit, configured to send the first signal in the second time period, and send the second signal in the third time period.

Based on the technical solution, a sensing signal in which half-duplex sensing and full-duplex sensing are alternate is used, the communication apparatus may provide a long-distance sensing capability in a half-duplex mode, and may also provide short-distance sensing coverage in a full-duplex mode. Especially in the full-duplex mode, short-distance sensing is mainly provided. Therefore, transmission may be performed at a low transmit power without being limited by antenna isolation, so that when the antenna isolation is limited, a detection range and performance of detecting a long-distance target are improved, and non-blind area detection is implemented.

According to an eighth aspect that is not according to the claims, a communication apparatus is provided. The apparatus may be implemented by a second device (a sensed target) or performed by a chip or a circuit disposed in the second device. This is not limited in this application.

The apparatus includes: a processing unit, configured to determine a first time period, where the first time period includes a second time period and a third time period, the second time period is used to receive a first signal, the third time period is used to receive a second signal, the second time period and the third time period are not contiguous to each other, a time domain length of the second time period and/or a time domain length of the third time period are/is less than a time domain length of a time domain symbol, and a time period other than the second time period and the third time period in the first time period is used to carry a zero power signal; and a transceiver unit, configured to receive the first signal in the second time period, and receive the second signal in the third time period.

Based on the technical solution, a sensing signal in which half-duplex sensing and full-duplex sensing are alternate is used, the communication apparatus may provide a long-distance sensing capability in a half-duplex mode, and may also provide short-distance sensing coverage in a full-duplex mode. Especially in the full-duplex mode, short-distance sensing is mainly provided. Therefore, transmission may be performed at a low transmit power without being limited by antenna isolation, so that when the antenna isolation is limited, a detection range and performance of detecting a long-distance target are improved, and non-blind area detection is implemented.

With reference to the seventh aspect and the eighth aspect, in a possible implementation, the length of the third time period is greater than the length of the second time period, and the third time period is after the second time period in time domain.

With reference to the seventh aspect and the eighth aspect, in a possible implementation, the time domain length of the second time period is greater than or equal to a product of 1024 and a time domain length of a first time unit, and the time domain length of the second time period is less than or equal to a product of 4096 and the time domain length of the first time unit, where the time domain length of the first time unit is 1/(4096*480* 1000) second.

With reference to the seventh aspect and the eighth aspect, in a possible implementation, a time domain length of the third time period is equal to a product of 16384 and a time domain length of a first time unit, where the time domain length of the first time unit is 1/(4096*480* 1000) second.

With reference to the seventh aspect and the eighth aspect, in a possible implementation, a start time domain position of the second time period is the same as a start time domain position of the first time period.

With reference to the seventh aspect and the eighth aspect, in a possible implementation, a start time domain position of the second time period and a start time domain position of the first time period are separated by a fourth time period, and a time domain length of the fourth time period is greater than 0.

With reference to the seventh aspect and the eighth aspect, in a possible implementation, the length of the fourth time period is less than or equal to a product of 9959 and the time domain length of the first time unit; or the time domain length of the fourth time period is less than or equal to a product of 3404 and the time domain length of the first time unit; or the time domain length of the fourth time period is less than or equal to a product of 1356 and the time domain length of the first time unit, where the time domain length of the first time unit is $1/(4096*480*1000)$ second.

With reference to the seventh aspect and the eighth aspect, in a possible implementation, a time domain interval between an end position of the second time period and a start time domain position of the third time period is greater than or equal to a product of 6554 and a time domain length of a first time unit, or the time domain interval between the end position of the second time period and the start time domain position of the third time period is greater than or equal to a product of 13108 and the time domain length of the first time unit, where the time domain length of the first time unit is $1/(4096*480*1000)$ second.

With reference to the seventh aspect and the eighth aspect, in a possible implementation, the first signal presents an arrangement with an equal interval in frequency domain, the second signal presents an arrangement with an equal interval in frequency domain, and an interval in frequency domain of the first signal in the second time period is greater than an interval in frequency domain of the second signal in the third time period.

With reference to the seventh aspect and the eighth aspect, in a possible implementation, the first time period further includes a fifth time period, the fifth time period is used to receive a third signal, the third time period is used to receive a fourth signal, the third signal is an echo signal or a reflected signal of the first signal, the fourth signal is an echo signal or a reflected signal of the second signal, and the third signal and the fourth signal are used to sense a target.

With reference to the seventh aspect and the eighth aspect, in a possible implementation, a start time domain position of the fifth time period is the same as the end time domain position of the second time period, or the start time domain position of the fifth time period and the end time domain position of the second time period are separated by a sixth time period.

With reference to the seventh aspect and the eighth aspect, in a possible implementation, the start time domain position of the third time period is the same as an end time domain position of the fifth time period, or the start time domain position of the third time period and the end time domain position of the fifth time period are separated by a seventh time period.

With reference to the seventh aspect and the eighth aspect, in a possible implementation, the time domain length of the first time period is equal to a sum of time domain lengths of two time domain symbols.

According to a ninth aspect, a communication apparatus is provided. The apparatus is configured to perform the method provided in the first aspect. Specifically, the communication apparatus may include a unit and/or a module configured to perform the method provided in any one of the first aspect to the fourth aspect or the foregoing implementations of the first aspect to the fourth aspect, for example, a processing unit and/or a communication unit.

In an implementation, the communication apparatus includes a communication unit and a processing unit. The communication unit may be a transceiver or an input/output interface. The processing unit may be at least one processor. Optionally, the transceiver may be a transceiver circuit. Optionally, the input/output interface may be an input/output circuit.

In another implementation, the communication apparatus is a chip, a chip system, or a circuit in the first device. When the communication apparatus is the chip, the chip system, or the circuit in the first device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a tenth aspect, a communication apparatus is provided, including a processor, and optionally, further including a memory. The processor is configured to control a transceiver to receive and send signals. The memory is configured to store a computer program. The processor is configured to invoke the computer program from the memory and run the computer program, so that the sending device performs the method in any one of the first aspect to the fourth aspect or the possible implementations of the first aspect to the fourth aspect.

Optionally, there are one or more processors, and there are one or more memories.

Optionally, the memory may be integrated with the processor, or the memory and the processor may be separately disposed.

Optionally, the first device further includes a transceiver, and the transceiver may be specifically a transmitting machine (transmitter) and a receiving machine (receiver).

According to an eleventh aspect, a communication system is provided, including: a first device, configured to perform the method according to any one of the first aspect and the third aspect or the possible implementations of the first aspect and the third aspect; and a second device, configured to perform the method according to any one of the second aspect and the fourth aspect or the possible implementations of the second aspect and the fourth aspect.

According to a twelfth aspect, a computer-readable storage medium is provided. The computer-readable storage medium stores a computer program or code, and when the computer program or the code is run on a computer, the computer is enabled to perform the method according to any one of the first aspect to the fourth aspect or the possible implementations of the first aspect to the fourth aspect.

According to a thirteenth aspect, a chip is provided, including at least one processor. The at least one processor is coupled to a memory, the memory is configured to store a computer program, and the processor is configured to invoke the computer program from the memory and run the computer program, so that a sending device on which the chip is installed performs the method according to any one of the first aspect to the fourth aspect or the possible implementations of the first aspect to the fourth aspect.

The chip may include an input circuit or interface configured to send information or data, and an output circuit or interface configured to receive the information or data.

According to a fourteenth aspect, a computer program product is provided. The computer program product includes: computer program code. When the computer program code is run by a sending device, the method according to any one of the first aspect to the fourth aspect or the possible implementations of the first aspect to the fourth aspect is performed.

For beneficial effects of the fifth aspect to the fourteenth aspect, refer to the beneficial effects of the first aspect to the fourth aspect. Details are not described again.

## BRIEF DESCRIPTION OF DRAWINGS

FIG. 1 is a diagram of an application scenario to which an embodiment of this application is applicable;

FIG. 2 is a diagram of another application scenario to which an embodiment of this application is applicable;

FIG. 3 is a diagram of a structure of a sensing signal;

FIG. 4 is a schematic flowchart of a communication method according to an embodiment of this application;

FIG. 5 is a diagram of a structure of a sensing signal according to an embodiment of this application;

FIG. 6 is a schematic flowchart of another communication method according to an embodiment of this application;

FIG. 7 is a schematic flowchart of another communication method according to an embodiment of this application;

FIG. 8 is a diagram of a structure of another sensing signal according to an embodiment of this application;

FIG. 9 is a diagram of a structure of a communication apparatus according to an embodiment of this application; and

FIG. 10 is a diagram of a communication architecture according to an embodiment of this application. Parts of description and drawing which are not covered by the claims are not presented as embodiments of the present application, but as examples useful for understanding the present application.

## DESCRIPTION OF EMBODIMENTS

The following describes technical solutions of this application with reference to the accompanying drawings.

The technical solutions of embodiments of this application may be applied to various communication systems, for example, a long term evolution (LTE) system, a long term evolution advanced (LTE-A) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, a next-generation communication system (for example, a fifth-generation (fifth-generation, 5G) communication system), a system integrating a plurality of access systems, an evolved system, three application scenarios of a 5G mobile communication system such as enhanced mobile broadband (enhanced Mobile Broadband, eMBB), ultra-reliable low-latency communication (ultra-reliable low-latency communication, URLLC), and enhanced machine type communication (enhanced Machine Type Communication, eMTC), or a new communication system that emerges in the future. The technical solutions provided in this application may be further applied to a future communication system, for example, a 6th generation mobile communication system. This is not limited in this application.

The technical solutions provided in this application may be further applied to machine type communication (machine type communication, MTC), long term evolution-machine type communication (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, an internet of vehicles. Communication manners in an internet of vehicles system are collectively referred to as vehicle to X (vehicle to X, V2X, where X may represent anything). For example, the V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, vehicle to network (vehicle to network, V2N) communication, or the like.

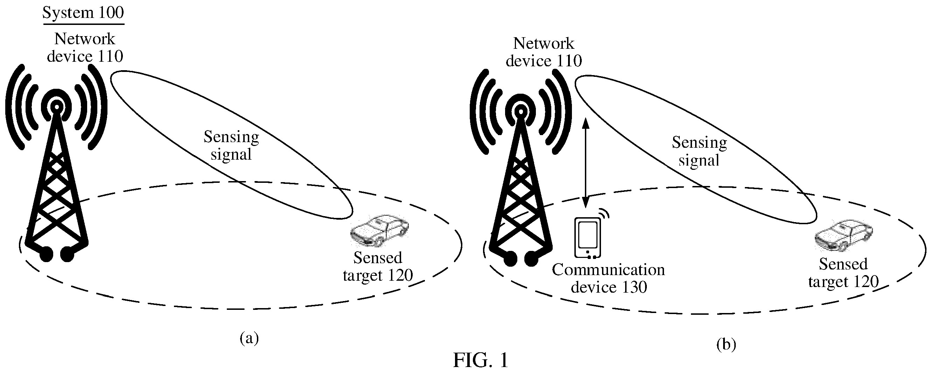

A network device (for example, a network device 110 in FIG. 1) in embodiments of this application is an apparatus that is deployed in a radio access network and that provides a wireless communication function for a mobile station (mobile station, MS), for example, a base station. The base station may include a macro base station, a micro base station (also referred to as a small cell), a relay station, an access point, and the like in various forms. In systems that use different radio access technologies, devices with a base station function may have different names. For example, in a 3rd generation (3rd generation, 3G) system, the device is referred to as a NodeB (NodeB). In an LTE system, the device is referred to as an evolved NodeB (evolved NodeB, eNB, or eNodeB). In a 5G system, the device carries a next generation NodeB (next generation NodeB, gNB), and the like. In addition, the network device may alternatively be a device bearing a base station function in device-to-device (device-to-device, D2D), machine type communication, or internet of vehicles communication, a satellite device, a base station device in a future communication network, or the like. For ease of description, in all embodiments of this application, the apparatuses that provide the wireless communication function for the MS are collectively referred to as network devices, base stations, or BSs. In this application, the base station may also be referred to as a base station device.

A terminal device (for example, a communication device 130 in FIG. 1) in embodiments of this application includes various mobile terminals and uncrewed aerial vehicles that have a wireless communication function, for example, a handheld device, a vehicle-mounted device, a wearable device, a computing device, or another processing device connected to a wireless modem, and may be specifically user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. Alternatively, the terminal device may be a satellite phone, a cellular phone, a smartphone, a wireless data card, a wireless modem, a machine type communication (machine type communication, MTC) device, a terminal device in a 5G network, or a future communication network, or the like. The terminal device is also be referred to as user equipment (user equipment, UE), a terminal, or the like.

The network device in embodiments of this application may alternatively be a device having a sensing function. The device may send a sensing signal, and receive and process an echo signal of a sensed target. In embodiments of this application, a communication apparatus configured to implement a function of the network device may be a network device, may be a network device having some functions of a base station, or may be an apparatus that can support the network device in implementing the function, for example, a chip system. The apparatus may be installed in the network device.

The sensed target may be a tangible object that can be sensed on the ground, for example, a mountain, a forest, or a building, or may be a movable object, for example, a vehicle, an uncrewed aerial vehicle, a pedestrian, or a terminal device. The sensed target is a target that can be sensed by the network device having the sensing function. The target may feed back an electromagnetic wave to the network device. The sensed target may also be referred to as a detected target, a sensed object, a detected object, a sensed device, or the like. This is not limited in embodiments of this application.

The sensing signal may be a signal used to sense a target or detect a target, or the sensing signal is a signal used to sense environment information or detect environment information. For example, the sensing signal is an electromagnetic wave that is sent by the network device and that is used to sense environment information. The sensing signal may also be referred to as a radar signal, a radar sensing signal, a detection signal, a radar detection signal, an environment sensing signal, or the like. This is not limited in embodiments of this application.

FIG. 1 is a diagram of a network architecture to which an embodiment of this application is applicable. The network architecture is applicable to a mono-static sensing scenario. Mono-static sensing means that at least one sensing device is included. The sensing device may send a sensing signal and receive an echo signal or a reflected signal of the sensing signal to sense a target object. As shown in (a) in FIG. 1, a communication system includes at least one sensing device (for example, a network device 110 in FIG. 1) and at least one sensed target (for example, 120 in FIG. 1). The network device 110 may send a sensing signal, and receive a sensing echo signal or reflected signal generated when the sensing signal encounters the sensed target, to obtain the sensed target 120 through detection.

It should be understood that, one network device 110 and one sensed target 120 shown in FIG. 1 are merely used as an example. The communication system is not limited to including more sensing devices, and each sensing device is not limited to performing sensing and communication with one or more sensed targets.

In addition, when sending the sensing signal, the network device 110 may send the sensing signal in a manner of time division multiplexing with a communication signal, in other words, the network device sends only the sensing signal; or may send the sensing signal in another manner of frequency division multiplexing or space division multiplexing with the communication signal and simultaneously perform sensing and communication. This is not limited in embodiments of this application.

As shown in (b) in the figure, the network device 110 sends a sensing signal to sense a sensed target, and sends a communication signal to communicate with a communication device 130.

It may be understood that FIG. 1 is merely an example. A communication method provided in embodiments of this application may further relate to a network element or a device that is not shown in FIG. 1. It is clear that the communication method provided in embodiments of this application may include only some network elements shown in FIG. 1.

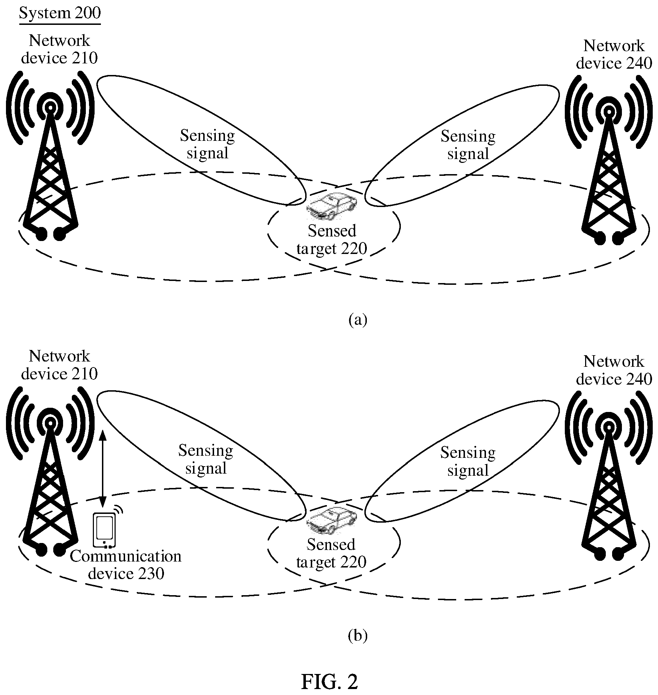

FIG. 2 is a diagram of another network architecture to which an embodiment of this application is applicable. The network architecture is applicable to a bi-static sensing scenario. Bi-static sensing means that at least two sensing devices are included. One sensing device sends a sensing signal, and the other sensing device receives an echo signal or a reflected signal, so that a target object can be sensed. In other words, in this scenario, one sensing device may send the sensing signal to enable the other sensing device to sense the target object. As shown in (a) in FIG. 2, a communication system includes at least two sensing devices (for example, a network device 210 and a network device 240 in FIG. 2) and at least one sensed target (for example, 220 in FIG. 2). The network device 210 may send a sensing signal, and the network device 240 receives a sensing echo signal or reflected signal generated when the sensing signal encounters the sensed target, to obtain the sensed target 220 through detection. It should be understood that, two network devices and one sensed target shown in FIG. 2 are merely used as examples. The communication system is not limited to including more sensing devices, and each sensing device is not limited to performing sensing and communication with one or more sensed targets.

In addition, when sending the sensing signal, the network device 210 may send the sensing signal in a manner of time division multiplexing with a communication signal, in other words, the network device sends only the sensing signal; or may send the sensing signal in another manner of frequency division multiplexing or space division multiplexing with the communication signal and simultaneously perform sensing and communication. This is not limited in embodiments of this application.

As shown in (b) in the figure, the network device 210 sends a sensing signal, and the network device 240 receives an echo signal or a reflected signal of the sensing signal. Simultaneously, the network device 210 may send a communication signal to communicate with a communication device 230. Similarly, the network device 240 may also send a communication signal to communicate with the communication device 230.

It may be understood that FIG. 2 is merely an example. A communication method provided in embodiments of this application may further relate to a network element or a device that is not shown in FIG. 2. It is clear that the communication method provided in embodiments of this application may include only some network elements shown in FIG. 2.

It may be understood that the foregoing network architectures applicable to embodiments of this application are merely examples, and a network architecture applicable to embodiments of this application is not limited thereto. Any network architecture that can implement functions of the foregoing network elements is applicable to embodiments of this application.

First, to make the method in embodiments of this application easier to be understood, some concepts in embodiments of this application are described below.

1. Time domain symbol: is referred to as a symbol for short. A symbol may be a minimum time unit for signal transmission in time domain. In other words, a time domain resource occupied for signal transmission may be an integer multiple of one symbol. Alternatively, a time domain resource for signal transmission may be configured at a symbol granularity. It should be noted that the time domain symbol may alternatively be named in combination with another multiple access manner. This is not limited in embodiments of this application. A length of the time domain symbol may vary for different subcarrier spacings. For example, the time domain symbol may be an orthogonal frequency division multiplexing (orthogonal frequency division multiplexing, OFDM) symbol, may be an OFDM symbol including a cyclic prefix, or may be another time unit representing a time domain length. In this application, a minimum time unit for signal transmission in time domain is a time domain symbol. It may be understood that a name of the minimum time unit continuously evolves. The solutions of this application may be applicable to any evolved name of the minimum time unit. This is not limited in this application.

2. Resource (resource): includes one or more of a time domain resource, a frequency domain resource, or a code domain resource.

3. Resource element (resource element, RE): indicates a granularity of a resource. One RE includes one symbol in time domain and one subcarrier in frequency domain in this application, and may be uniquely identified by an index pair (k, l), where k is a subcarrier index, and l is a symbol index.

4. Resource block (resource block, RB): One RB includes $N_{sc}^{RB}$ contiguous subcarriers in frequency domain. $N_{sc}^{RB}$ is a positive integer. In a 5G system, $N_{sc}^{RB}$ is equal to 12, and $N_{sc}^{RB}$ may be another value when being applied to another system. In embodiments of this application, the RB is defined merely from a perspective of a frequency domain resource, and is irrelevant to a time domain resource.

5. Time unit: is a time domain unit used for data transmission, and may include a radio frame (radio frame), a subframe (subframe), a slot (slot), a mini-slot (mini-slot), at least one symbol, or the like. One slot includes N symbols, where N is a positive integer. For example, for a normal cyclic prefix (normal cyclic prefix, NCP), N is equal to 14; and for an extended CP (extended cyclic prefix, ECP), N is equal to 12. When the solutions of this application are applied to another system, N may alternatively be another value. A length of one slot may vary for different subcarrier spacings. This is not limited in embodiments of this application. For example, when a subcarrier spacing is 15 kHz and a CP is an NCP, one slot is 1 ms (millisecond), and includes 14 symbols.

6. Sensing signal: is a signal used to sense a target or detect a target, or the sensing signal is a signal used to sense environment information or detect environment information. For example, the sensing signal is an electromagnetic wave that is sent by a network device and that is used to sense environment information. The sensing signal may also be referred to as a radar signal, a radar sensing signal, a detection signal, a radar detection signal, an environment sensing signal, or the like. A specific name of the sensing signal is not limited in this application.

7. Echo signal: is an electromagnetic feedback signal generated through transmission, scattering, reflection, and the like performed by a sensed target on the sensing signal. The echo signal is used to sense the target, and corresponds to the sensed target. There may be one or more sensed targets.

8. Full-duplex mode and half-duplex mode: In the full-duplex mode, bidirectional signal transmission is simultaneously performed, that is, sending of a signal and receiving of a signal are simultaneously performed. For a device operating in the full-duplex mode, because sending and receiving of signals are simultaneously performed, receive and transmit coupling interference (or may be referred to as self-interference) exists. This is equivalent to that a signal sent on a transmit link is directly received on a receive link. In the half-duplex mode, data can be only received or can be only sent at a same moment. In a time division duplex mode, uplink transmission and downlink transmission are separated in terms of time.

9. Antenna isolation: isolation (isolation) is a ratio of an input power of a port to an output power of another port. The antenna isolation is used to quantitatively represent coupling strength between antennas. In a system, antenna isolation needs to meet a specific requirement to ensure that each antenna operates normally. When the antenna isolation fails to meet the requirement, interference between antennas exceeds a useful signal. Consequently, the system cannot operate normally. Generally, a ratio of a transmit power of a transmit antenna to a receive power of another antenna is defined as the antenna isolation. The isolation is generally expressed in a logarithmic form. A unit of the isolation is dB (decibel, dB). Generally, the isolation is a positive value. Larger isolation indicates less interference between antennas. In this application, a case in which a high value of the antenna isolation cannot be implemented due to a process level or a hardware implementation is referred to as a case that the antenna isolation is limited.

10. Saturation level: may be a saturation level of an analog to digital converter (Analog to Digital Converter, ADC). After receiving an echo signal, a receiving device needs to convert the received signal from an analog signal into a digital signal via the ADC, and a power of the analog signal processed by the ADC needs to be in an effective range of the ADC. An upper limit of the effective range of the ADC may be referred to as the saturation level of the ADC. Alternatively, the saturation level may be a maximum power value of a signal that can be processed by another component of the receiving device. This is not limited in this application.

11. Zero power signal: A sending device or a receiving device carries the zero power signal, in other words, the sending device or the receiving device does not carry a signal on a resource corresponding to a frequency domain resource, in other words, the sending device does not send a signal, and the receiving device does not receive a signal.

In a full-duplex sensing mode, a sensing device needs to have sufficient antenna isolation. If the sensing device does not have sufficient antenna isolation, receive and transmit coupling interference caused because the sensing device simultaneously performs receiving and sending of (in other words, simultaneously receives a signal and sends a signal) exceeds a saturation level of the sensing device, and consequently the sensing device cannot operate. How to resolve a problem of sensing performance deterioration caused because the antenna isolation of the sensing device is limited has become a key problem in current research.

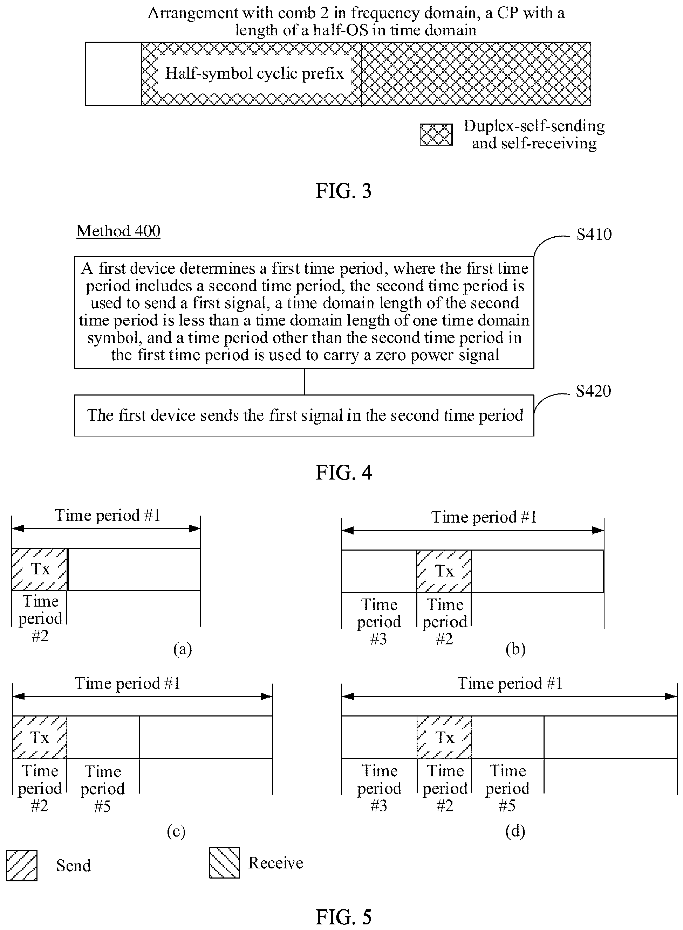

For example, in an existing technology in which sensing and communication are integrated, a commonly used sensing signal is a half-symbol cyclic prefix OFDM signal. As shown in FIG. 3, the sensing signal presents an arrangement with comb 2 in frequency domain, and a cyclic prefix with a length of a half time domain symbol is generated in time domain. A mono-static sensing scenario is used as an example. A half-symbol cyclic prefix OFDM signal requires a network (sensing) device to use a full-duplex mode in which receiving and sending are simultaneously performed (in other words, receiving of a signal and sending of a signal are simultaneously performed). In other words, when transmitting a sensing signal, the sensing device (the network device) needs to simultaneously receive an echo signal of the sensing signal.

When antenna isolation of the sensing device is limited, receive and transmit coupling interference caused because the sensing device simultaneously performs receiving and sending(in other words, simultaneously receives a signal and sends a signal) may exceed a saturation level of the sensing device. This affects normal operation of the sensing device. In this case, a feasible solution to resolve the problem is reducing a transmit power of the sensing device, so that the receive and transmit coupling interference does not exceed the saturation level of the sensing device. However, in this solution, target sensing performance of the sensing device is seriously affected.

In view of this, this application provides a communication method and apparatus, to send a sensing signal, and improve a detection range and performance of detecting a to-be-detected target.

The following describes the technical solutions of this application.

FIG. 4 is a schematic flowchart of a communication method according to this application. It should be understood that FIG. 4 shows steps or operations of the communication method. However, these steps or operations are merely examples. Other operations or variants of the operations in FIG. 4 may alternatively be performed in this embodiment of this application.

Optionally, the procedure shown in FIG. 4 may be performed by a first device (as a sensing device, which may be a network device), a module and/or a component (for example, a chip or an integrated circuit) that is installed in the first device and that has a corresponding function, or the like. This embodiment of this application is applicable to a mono-static sensing scenario, for example, the scenario shown in FIG. 1, is applicable to a bi-static sensing scenario, for example, the scenario shown in FIG. 2, or is applicable to a multi-static scenario in which there are more than two sensing stations. The following uses the mono-static scenario as an example for description.

S410: The first device determines a first time period, where the first time period includes a second time period, the second time period is used to send a first signal, a time domain length of the second time period is less than a time domain length of a time domain symbol, and a time period other than the second time period in the first time period is used to carry a zero power signal.

S420: The first device sends the first signal in the second time period.

Specifically, the first time period includes the second time period, the second time period is used by the first device to send the first signal, and the another time period in the first time period is used to carry the zero power signal, in other words, the first device does not send the first signal in the another time period.

In an optional manner, the first time period is one time domain symbol, or the first time period includes two time domain symbols.

For example, the first time period may be an OFDM symbol whose subcarrier spacing is 120 kHz. Alternatively, a time domain length of the first time period may be equal to T, and T=(N1+N2)* $T_c$, where $T_c$=1/(4096*480*1000) second, N1=2048*64*2$^{-u}$, u corresponds to a subcarrier spacing of an OFDM symbol, and N2 corresponds to a length of a cyclic prefix of the OFDM symbol. For example, when the subcarrier spacing is 120 kHz, u=3, that is, N1=2048*64*(1/8)=16384.

In this application, a design of different time periods in the first time period corresponds to a design of time domain resources for transmission of a sensing signal and/or an echo signal. Therefore, the design of different time periods in the first time period in this application may also be understood as a waveform design of the sensing signal and/or the echo signal.

It should be noted that a resource used by the first device to send the first signal includes a time domain resource and a frequency domain resource, the time domain resource is the second time period, and the frequency domain resource may be one or more resource blocks (Resource Blocks, RBs) or one or more subcarriers. That the another time period in the first time period is used to carry the zero power signal described herein may be understood as that a resource corresponding to the frequency domain resource in the another time period in the first time period is used to carry the zero power signal. Similarly, that the first device does not send the first signal in the another time period may be understood as that a signal is not carried on the resource corresponding to the frequency domain resource in the another time period in the first time period.

It may be understood that, in the following embodiments, for a case that the first device does not send a signal or a second device does not receive a signal, refer to the foregoing descriptions. Details are not described again.

Correspondingly, the second device determines a first time period, where the first time period includes a second time period, the second time period is used to receive a first signal, a time domain length of the second time period is less than a time domain length of a time domain symbol, and a time period other than the second time period in the first time period is used to carry a zero power signal.

Specifically, the first time period includes the second time period, the second time period is used by the second device to receive the first signal, and the another time period in the first time period is used to carry the zero power signal, in other words, the second device does not receive the first signal in the another time period.

The first device is used as an example of a sensing device. For example, the first device may be specifically a network device having a sensing function, or another apparatus or device having the sensing function. The sensing device may also be referred to as a detection device, a radar detection device, an environment sensing device, or the like.

The second device is used as an example of a sensed target. For example, the second device may be a tangible object that can be sensed on the ground, for example, a mountain, a forest, or a building, or may be a movable object, for example, a vehicle, an uncrewed aerial vehicle, a pedestrian, or a terminal device. The sensed target is a target that can be sensed by the network device having the sensing function. The target may feed back an electromagnetic wave to the network device. The sensed target may also be referred to as a detected target, a sensed object, a detected object, a sensed device, or the like.

The first signal is used as an example of a sensing signal. It may be understood that the sensing signal may also be referred to as a detection signal, a radar signal, an environment sensing signal, or the like.

For ease of description, the first signal is represented by using the sensing signal below for detailed description.

In this application, the first time period may be understood as a time period in which the sensing device performs target sensing; and/or the first time period may be understood as a length of a time window or a length of a time period that may be used by the sensing device to send the sensing signal. A relationship between the first time period and the second time period may also be understood as that the sensing device may send the sensing signal in any part (the second time period) of the first time period. Because the first time period is a time window in which the sensing device performs target sensing, the first time period may also be understood as a time period that is not used to send a physical downlink shared channel (physical downlink shared channel, PDSCH) and/or a physical downlink control channel (physical downlink control channel, PDCCH) and/or a physical broadcast channel (physical broadcast channel, PBCH); and/or the first time period may be understood as a time period that is not used to receive a physical uplink shared channel (physical uplink shared channel, PUSCH) and/or a physical uplink control channel (physical uplink control channel, PUCCH) and/or a physical random access channel (physical random access channel, PRACH).

An example of a sensing signal applicable to the method 400 is provided below.

FIG. 5 is a diagram of a structure of a sensing signal according to an embodiment of this application. The structure may be used to operate in a half-duplex mode.

First, the structure design is described.

In FIG. 5, a time period #1 represents a first time period, a time period #2 represents a second time period, a time period #3 represents a third time period, a time period #4 represents a fourth time period, and a time period #5 represents a fifth time period.

Refer to (a) in FIG. 5. In (a) in FIG. 5, a time domain length of the time period #1 is a length of a time domain symbol, and a start position of the time period #1 is the same as a start position of the time period #2. The time period #2 is a part of the time period #1. The time period #2 is used to send a sensing signal. Optionally, the second device receives the sensing signal in the time period #2.

A time period other than the time period #2 in the time period #1 is used to carry a zero power signal. In other words, the first device does not send a signal in the time period other than the time period #2 in the time period #1. In other words, the first device sends the sensing signal only in the time period #2 in the time period #1. In other words, in the time period #1, the first device may send the sensing signal at a start moment of the time period #2, and the first device stops sending the sensing signal at an end moment of the time period #2.

In a possible implementation, a time domain length of the time period #2 is greater than or equal to a first value.

The time period #2 is a time domain resource for sending the sensing signal in the first time period. A longer time domain length for sending the sensing signal indicates stronger accumulated energy of the sensing signal in time domain and better sensing performance. Therefore, a lower limit of the time domain length of the second time period needs to be properly designed. For different coverage areas of the sensing signal, different lower duration limits of the second time period may be designed. The following provides some design examples of time domain duration of the time period #2.

For example, the first value may be a product of 1024 and a time domain length of a first time unit. During specific implementation, the first value may alternatively be another value. The foregoing is merely an example for description, and is not limited herein.

Optionally, the time domain length of the first time unit may be $1/(4096*480*1000)$ second. In this example, the time domain length of the time period #2 is at least greater than or equal to the product of 1024 and the time domain length of the first time unit. This can ensure that the coverage area of the sensing signal reaches about 1000 meters.

In a possible implementation, the time domain length of the time period #2 is less than or equal to a second value.

It should be noted that, in the half-duplex mode, because an echo signal cannot be received in the time period #2, an echo signal generated by a short-distance target cannot be received. As a result, the short-distance target cannot be detected, and a detection blind area is generated. Therefore, the length of the time period #2 should not be excessively long, so as to ensure that the short-distance detection blind area is not excessively large. For different coverage areas of the sensing signal, different upper duration limits of the second time period may be designed. The following provides some upper limit designs of the time domain duration of the time period #2.

For example, the second value may be a product of 4096 and the time domain length of the first time unit.

It may be understood that the time domain length of the time period #2 is at least less than or equal to the product of 4096 and the time domain length of the first time unit. This can ensure that the coverage blind area of the sensing signal is not excessively large (for example, the blind area is less than 500 meters).

For example, the time domain length of the time period #2 is equal to a product of 2048 and the time domain length of the first time unit, or the time domain length of the time period #2 may be the product of 4096 and the time domain length of the first time unit. In this case, the blind area is not excessively large (for example, the blind area is less than 500 meters) and the coverage area of the sensing signal is sufficient (for example, the coverage area reaches 1000 meters).

Optionally, a start time domain position of the time period #2 is the same as a start time domain position of the time period #1. In other words, refer to (a) in FIG. 5. The time period #1 includes the time period #2.

Optionally, the start time domain position of the time period #2 is different from the start time domain position of the time period #1. In other words, the start time domain position of the time period #2 and the start time domain position of the time period #1 are separated by a time period.

In this application, refer to (b) in FIG. 5. The start time domain position of the time period #2 and the start time domain position of the time period #1 are separated by a time period #3. For specific descriptions of the time period #2, refer to the detailed descriptions in (a) in FIG. 5. Details are not described herein again.

A time domain length of the time period #3 is greater than 0.

In this application, the time period #3 is used to send or receive a zero power signal, in other words, the first device does not send the sensing signal in the time period #3.

Optionally, the second device does not receive the sensing signal in the time period #3.

In an optional understanding, the time period #3 is used by the first device to shield some interference when receiving a signal. For example, when the time period #1 is a first OFDM symbol, the interference may be an echo signal generated when a PDSCH signal on a previous OFDM symbol of the first OFDM symbol encounters a target object. It may be understood that delays and strengths of echo signals generated by target objects with different distances from the sensing device are different. A strength of an echo signal generated by a target object with a shorter distance is stronger, interference is larger, and a delay is smaller. Therefore, the time period #3 may be used to shield an echo signal with a short distance and strong interference. This helps improve detection performance.

Further, the first device may perform interference measurement in the time period #3 corresponding to the zero power signal. This facilitates subsequent processing on a received signal, for example, performing interference cancellation on the received signal.

In an optional understanding, the time period #3 is before the time period #2 in time domain, and the time period #3 and the time period #2 are contiguous in time domain.

In an optional understanding, an end time domain position of the time period #3 is before the start time domain position of the time period #2.

In an optional understanding, the time period #3 is before a moment t1 of the start time domain position of the time period #2. Optionally, for example, a start time domain position of the time period #3 is a moment t0, and the end time domain position of the time period #3 may overlap the start time domain position t1 of the time period #2.

In a possible implementation, the time domain length of the time period #3 is less than or equal to a third value.

In this application, the third value is equal to a sum of a first time domain length and a second time domain length.

In a possible case, the first time domain length may be equal to a product of 7783 and the time domain length of the first time unit, and the second time domain length may be equal to a product of 1152 and the time domain length of the first time unit, or the second time domain length may be equal to a product of 2176 and the time domain length of the first time unit. The second time domain length is a time domain length of a cyclic prefix. It should be understood that a cyclic prefix of an OFDM symbol has a plurality of optional values. For different cyclic prefix lengths, the length of the time period #3 may have different configurations.

For example, when the second time domain length is the product of 2176 and the time domain length of the first time unit, the sum of the first time domain length and the second time domain length is a product of 9959 and the time domain length of the first time unit, that is, the time domain length of the time period #3 is less than or equal to the product of 9959 and the time domain length of the first time unit.

For example, when the second time domain length is the product of 1152 and the time domain length of the first time unit, the sum of the first time domain length and the second time domain length is a product of 8935 and the time domain length of the first time unit, that is, the time domain length of the time period #3 is less than or equal to the product of 8935 and the time domain length of the first time unit.

In another possible case, the first time domain length may be equal to a product of 1228 and the time domain length of the first time unit, and the second time domain length may be equal to a product of 1152 and the time domain length of the first time unit, or the second time domain length may be equal to a product of 2176 and the time domain length of the first time unit.

For example, when the second time domain length is the product of 2176 and the time domain length of the first time unit, the sum of the first time domain length and the second time domain length is a product of 3404 and the time domain length of the first time unit, that is, the time domain length of the time period #3 is less than or equal to the product of 3404 and the time domain length of the first time unit.

For example, when the second time domain length is the product of 1152 and the time domain length of the first time unit, the sum of the first time domain length and the second time domain length is a product of 2380 and the time domain length of the first time unit, that is, the time domain length of the time period #3 is less than or equal to the product of 2380 and the time domain length of the first time unit.

In another possible case, the time domain length of the time period #3 is less than or equal to the first time domain length, and the first time domain length is equal to a product of 332 and the time domain length of the first time unit, or the first time domain length is equal to a product of 1356 and the time domain length of the first time unit.

For example, when the second time domain length is a product of 2176 and the time domain length of the first time unit, the first time domain length is the product of 1356 and the time domain length of the first time unit, that is, the time domain length of the time period #3 is less than or equal to the product of 1356 and the time domain length of the first time unit. For example, when the second time domain length is a product of 1152 and the time domain length of the first time unit, the first time domain length is the product of 332 and the time domain length of the first time unit, that is, the time domain length of the time period #3 is less than or equal to the product of 332 and the time domain length of the first time unit.

It should be understood that, in this application, the third value may be understood as that it is ensured that the time domain length of the time period #3 does not exceed one value, so as to ensure that the sensing signal can cover a sufficient sensing range.

For example, the third value may be the product of 9959 and the time domain length of the first time unit.

In an optional understanding, the time domain length of the time period #3 is less than or equal to the product of 9959 and the time domain length of the first time unit. This ensures that the sensing signal can cover at least about 500 meters when the time domain length of the time period #2 is less than or equal to the product of 2048 and the time domain length of the first time unit.

For another example, the third value may be the product of 3404 and the time domain length of the first time unit.

In an optional understanding, the time domain length of the time period #3 is less than or equal to the product of 3404 and the time domain length of the first time unit. This ensures that the sensing signal can cover at least about 1000 meters when the time domain length of the time period #2 is less than or equal to the product of 2048 and the time domain length of the first time unit.

For another example, the third value may be the product of 1356 and the time domain length of the first time unit.

In an optional understanding, the time domain length of the time period #3 is less than or equal to the product of 1356 and the time domain length of the first time unit. This ensures that the sensing signal can cover at least about 1000 meters when the time domain length of the time period #2 is less than or equal to the product of 4096 and the time domain length of the first time unit.

Optionally, the time period #1 further includes the time period #5. The time period #5 is after the time period #2, the time period #5 and the time period #2 are contiguous in time domain, and a time domain length of the time period #5 is greater than 0.

In this application, the time period #5 is a guard interval in time domain, or the time period #5 is used to map a zero power signal. In other words, the first device does not send the sensing signal in the time period #5. A start time domain position of the time period #5 is the same as an end time domain position of the time period #2.

In a possible implementation, the time domain length of the time period #5 is less than or equal to a fourth value.

For example, the fourth value is equal to a product of 1980 and the time domain length of the first time unit.

In this application, the guard interval in time domain may be understood as that the first device performs receive/transmit switching (including switching from a transmit antenna to a receive antenna) in the guard interval; or the first device performs switching from a transmit link to a receive link within the guard interval.

In an optional understanding, when performing half-duplex switching, the network device needs to perform switching between transmit and receive antennas and disable a PA of the transmit link. However, there is a delay in disabling the PA of the transmit link, and the delay is mainly caused by a decrease of a power of the PA to a power requirement for disabling. Therefore, the guard interval needs to be set. In the guard interval, the power of the PA of the transmit link should be reduced to a tolerable level of a receiving device. Therefore, a problem that short-distance detection performance is affected because receive and transmit coupling interference caused by simultaneous receiving and sending (in other words, receiving of a signal and sending of a signal are simultaneously performed) exceeds a maximum level requirement of the receiving device is avoided.

In an optional understanding, the start time domain position of the time period #5 is after the end time domain position of the time period #2.

In this application, refer to (d) in FIG. 5. The time period #1 may include the time period #2, the time period #3, and the time period #5. For detailed descriptions of each time period, refer to (a), (b), and (c) in FIG. 5. Details are not described herein again.

For the foregoing signal, this embodiment of this application provides configuration examples of some sensing signal with different coverage areas. The following provides detailed descriptions by using an example in which the first time period is one time domain symbol.

Configuration 1:

For example, a time domain length of the first OFDM symbol is $T_{cp}$ +16384$T_c$.

$T_{cp}$ is a time domain length of a cyclic prefix; $T_{cp}$ =1152T, or $T_{cp}$ =2176T; and a subcarrier spacing corresponding to the first OFDM symbol is 120 kHz.

For example, the time domain length of the time period #2 may be 2048$T_c$. $T_c$ is a time domain length of one time unit (an example of the time domain length of the first time unit), and $T_c$=1/($\Delta f_{max}$•$N_f$). $\Delta f_{max}$ =480×10$^3$ $Hz$, $N_f$ = 4096, and $T_c$=1/(4096*480*1000) second.

For example, the time domain length of the time period #3 is less than or equal to $T_{cp}$ +7783$T_c$. A range of the time domain length of the time period #3 is shown in Table 1.

**Table 1**

| $T_{cp}$ | Time period #2 | Time period #3 |
|---|---|---|
| 1152$T_c$ | 2048$T_c$ | 8935$T_c$ |
| 2176$T_c$ | 2048$T_c$ | 9959$T_c$ |

In other words, when $T_{cp}$=1152$T_c$, the time domain length of the time period #3 is less than or equal to 8935$T_c$. When $T_{cp}$ = 2176$T_c$, the time domain length of the time period #3 is less than or equal to 9959$T_c$.

In this application, the signal configuration may implement a coverage area of at least about 500 meters.

It should be noted that, when the time domain length of the time period #3 is greater than $T_{cp}$ +7783$T_c$, for the first OFDM symbol whose time domain length is $T_{cp}$ +16384$T_c$, it is difficult for a farthest detection range of the first OFDM symbol to meet a requirement of covering 500m.

By way of example but not limitation, the time domain length of the first OFDM symbol is $T_{cp}$ +16384$T_c$, the time domain length of the time period #2 may be 2048$T_c$, and the time domain length of the time period #3 is equal to $T_{cp}$+6144$T_c$. In other words, in the time domain length configuration, the blind area is not excessively large, and a coverage area of a first signal is sufficient (which is at least greater than 500m, and a coverage capability that is the same as that of a half-symbol cyclic prefix sensing signal is achieved).

The value of the time domain length of the sensing signal is merely an example for description, and is not limited in this embodiment of this application.

Configuration 2:

For example, a time domain length of the first OFDM symbol is $T_{cp}$ +16384$T_c$.

$T_{cp}$ is a time domain length of a cyclic prefix; $T_{cp}$ =1152T, or $T_{cp}$ =2176T; and a subcarrier spacing corresponding to the first OFDM symbol is 120 kHz.

For example, the time domain length of the time period #2 may be 2048$T_c$. $T_c$ is a time domain length of one time unit (an example of the time domain length of the first time unit), and $T_c$=1/($\Delta f_{max}$•$N_f$). $\Delta f_{max}$ =480×10$^3$ $Hz$, $N_f$ = 4096, and $T_c$=1/(4096*480*1000) second.

For example, the time domain length of the time period #3 may be less than or equal to $T_{cp}$ +1228$T_c$. A range of the time domain length of the time period #3 is shown in Table 2.

**Table 2**

| $T_{cp}$ | Time period #2 | Time period #3 |
|---|---|---|
| 1152$T_c$ | 2048$T_c$ | 2300$T_c$ |
| 2176$T_c$ | 2048$T_c$ | 3404$T_c$ |

In other words, when $T_{cp}$ =1152$T_c$, the time domain length of the time period #3 is less than or equal to 2380$T_c$. When $T_{cp}$ =2176$T_c$, the time domain length of the time period #3 is less than or equal to 3404$T_c$.

In this application, the sensing signal configuration may implement a coverage area of at least 1000 meters.

It should be noted that, when the time domain length of the time period #3 is greater than $T_{cp}$ +1228$T_c$, for the first OFDM symbol whose time domain length is $T_{cp}$ +16384$T_c$, it is difficult for a farthest detection range of the first OFDM symbol to meet a requirement of covering 1000m.

By way of example but not limitation, the time domain length of the first OFDM symbol is $T_{cp}$ +16384$T_c$, the time domain length of the time period #2 may be 2048$T_c$, and the time domain length of the time period #3 is equal to $T_{cp}$ +1228$T_c$. In other words, in the time domain length configuration, the blind area is not excessively large, and a coverage area of a first signal is sufficient (which reaches at least 1000 meters).

For example, for the first OFDM symbol whose time domain length is $T_{cp}$ +16384$T_c$, the time domain length of the time period #2 may be 4096$T_c$. $T_c$ is a time domain length of one time unit (an example of the time domain length of the first time unit), and $T_c$ =1/($\Delta f_{max}$•$N_f$). $\Delta f_{max}$ =480×10$^3$ $Hz$, $N_f$ = 4096, and $T_c$=1/(4096*480*1000) second.

For example, the time domain length of the time period #3 may be less than or equal to $T_{cp}$. A range of the time domain length of the time period #3 is shown in Table 3.

**Table 3**

| $T_{cp}$ | Time period #2 | Time period #3 |
|---|---|---|
| 1152$T_c$ | 4096$T_c$ | 332$T_c$ |
| 2176$T_c$ | 4096$T_c$ | 1356$T_c$ |

In other words, when $T_{cp}$ =1152$T_c$ the time domain length of the time period #3 is less than or equal

to $332T_c$. When $T_{cp}$ = $2176T_c$, the time domain length of the time period #3 is less than or equal to $1356T_c$.

It should be noted that, when the time domain length of the time period #3 is greater than $T_{cp}$, for the first OFDM symbol whose time domain length is $T_{cp}$ +16384$T_c$, it is difficult for a farthest detection range of the first OFDM symbol to meet a requirement of covering about 1000m.

By way of example but not limitation, the time domain length of the first OFDM symbol is $T_{cp}$ +16384$T_c$, and the time domain length of the time period #2 may be 4096$T_c$. When $T_{cp}$ =1152$T_c$, the time domain length of the time period #3 is less than or equal to 332$T_c$. When $T_{cp}$ = 2176$T_c$, the time domain length of the time period #3 is less than or equal to 1356$T_c$. In other words, in the time domain length configuration, the blind area is not excessively large, and a coverage area of a first signal is sufficient (which reaches 1000 meters).

The value of the time domain length of the sensing signal is merely an example for description, and is not limited in this embodiment of this application.

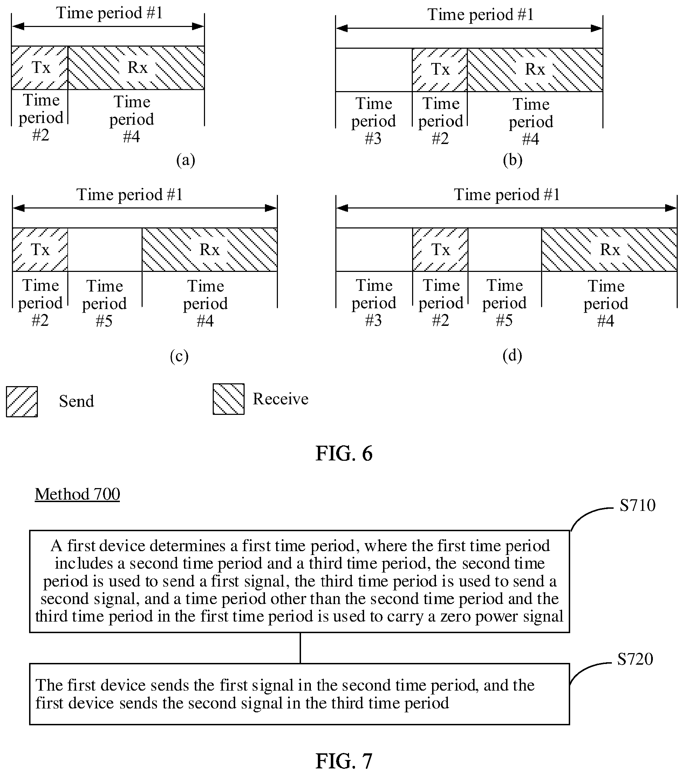

Optionally, refer to FIG. 6. In this application, a time period #1 may further include a time period #4. A first device receives a second signal in the time period #4.

Correspondingly, a second device may receive the second signal or may not receive the second signal in the time period #4.

The second signal is an echo signal or a reflected signal of a first signal, and the second signal is used to sense a target. It may also be understood as that the first signal and the second signal correspond to same data or a same signal sequence. For example, the first signal is a sensing signal sent by a network device, and is used to sense a target object, and the second signal is an echo signal corresponding to data or a signal sequence of the target object. In other words, the first signal is a signal that is sent by the network device and that is used to sense a target environment, and the second signal is a signal used to feed back a sensing result. That is, the first signal and the second signal correspond to the same target object or target environment. In other words, the first signal is a detection signal sent by the network device and is used to detect the target object, the second signal is a feedback signal corresponding to the target object, and the first signal and the second signal correspond to the same target object.

A time period #2 is before the time period #4, the time period #2 and the time period #4 may be contiguous or may be not contiguous in time domain, and lengths of both the time period #2 and the time period #4 are less than a time domain length of the time period #1.

In an optional understanding, a start time domain position of the time period #4 is after an end time domain position of the time period #2, as shown in (a), (b), (c), and (d) in FIG. 6. In other words, in the time period #1, only an operation of sending a signal is performed in a sending time period (the time period #2), and an operation of receiving a signal is performed in a time period (the time period #4) after the sending time period. The two time periods do not overlap and have a sequence, to be specific, an action of sending the signal is first performed (in the time period #2), and then an action of receiving the signal is performed (in the time period #4).

In an optional understanding, for example, a start time domain position of the time period #2 is a moment t1, the end time domain position of the time period #2 is a moment t2, the start time domain position of the time period #4 is a moment t3, an end time domain position of the time period #4 is a moment t4, the time period #2 is before the moment t3 of the start time domain position of the time period #4, and the start time domain position t3 of the time period #4 overlaps the end time domain position t2 of the time period #2, as shown in (a) and (b) in FIG. 6. For specific descriptions of the time period #2 and the time period #4, refer to the detailed descriptions in FIG. 5. Details are not described herein again.

In an optional understanding, the start time domain position t3 of the time period #4 does not overlap the end time domain position t2 of the time period #2, as shown in (c) and (d) in FIG. 6. The end time domain position of the time period #2 and the start time domain position of the time period #4 are separated by a time period #5.

In an optional understanding, a start time domain position of the time period #5 is after the end time domain position of the time period #2, and an end time domain position of the time period #5 is before the start time domain position of the time period #4.

In an optional understanding, for example, the time period #5 is between the moment t2 of the end time domain position of the time period #2 and the moment t3 of the start time domain position of the time period #4. Optionally, the start time domain position of the time period #5 may overlap the moment t2 of the end time domain position of the time period #2, and the end time domain position of the time period #5 may overlap the start time domain position t3 of the time period #4.

For specific descriptions of the time period #5, refer to the detailed descriptions in FIG. 5. Details are not described herein again.

Specific steps of sending and receiving sensing signals in the half-duplex mode in the mono-static sensing scenario are provided below.

   a. A first device determines a first resource, where the first resource is used to carry a first signal.

Specifically, the first device maps the first signal to the first resource. The first resource corresponds to a time period #2 in a time period #1 in time domain.

b. The first device sends the first signal in a time period #2.

c. The first device receives a second signal in a time period #4.

Specific steps of sending and receiving sensing signals in the half-duplex mode in the bi-static sensing scenario are provided below.

> a. A first device determines a first resource, where the first resource is used to carry a first signal.

Specifically, the first device maps the first signal to the first resource. The first resource corresponds to a time period #2 in a time period #1 in time domain.

b. The first device sends the first signal in the time period #2.

c. A third device (as another sensing device) determines a first resource, where the first resource is used to carry a second signal (an echo signal or a reflected signal of the first signal), and the first resource corresponds to the time period #2 in the time period #1 in time domain.

d. The third device receives the second signal in a time period #4, where the second signal is used to sense a target.

The foregoing steps of sending and receiving the sensing signals are merely an example for description. During actual implementation, another step may be further included. This is not limited in this embodiment of this application.

That the network device sends a signal on a part of time domain resources in one time domain symbol, but does not send the signal on other time domain resources in the time domain symbol is limited in the foregoing technical solutions. Therefore, the network device may receive the echo signal of the sensing signal on the time domain resource on which the signal is not sent, to detect a target. An advantage of this practice is that when antenna isolation of the network device is limited, the network device can avoid receive and transmit coupling interference caused by simultaneous receiving and sending (in other words, sending of a signal and receiving of a signal are simultaneously performed), to ensure that the network device normally sends the sensing signal. In addition, the second time period is less than a time domain length of a time domain symbol. This can ensure that a short-distance detection blind area caused because sending and receiving are not simultaneously performed is not excessively large.

In this application, for the sensing signal in the half-duplex manner, sending of a signal and receiving of a signal are not performed simultaneously in time domain. In this case, it may be understood that a signal that may be received may be missed in time domain in which a signal is sent, that is, there is a short-distance detection blind area. Therefore, in embodiments of this application, a mixed signal is designed, and half-duplex sensing and full-duplex sensing are alternately used, to implement non-blind area detection.

FIG. 7 is a schematic flowchart of another communication method according to an embodiment of this application. It should be understood that FIG. 7 shows steps or operations of the communication method. However, these steps or operations are merely examples. Other operations or variants of the operations in FIG. 7 may alternatively be performed in this embodiment of this application.

Optionally, the procedure shown in FIG. 7 may be performed by a first device (as a sensing device, which may be a network device), a module and/or a component (for example, a chip or an integrated circuit) that is installed in the first device and that has a corresponding function, or the like. This embodiment of this application is applicable to a mono-static sensing scenario, for example, the scenario shown in FIG. 1, is applicable to a bi-static sensing scenario, for example, the scenario shown in FIG. 2, or is applicable to a multi-static scenario in which there are more than two sensing stations. The following uses the mono-static scenario as an example for description.

S710: The first device determines a first time period, where the first time period includes a second time period and a third time period, the second time period is used to send a first signal, the third time period is used to send a second signal, the second time period and the third time period are not contiguous to each other, a time domain length of the second time period and/or a time domain length of the third time period are/is less than a time domain length of a time domain symbol, and a time period other than the second time period and the third time period in the first time period is used to carry a zero power signal.

Optionally, a length of the first time period is a sum of lengths of two time domain symbols, or the first time period includes two time domain symbols.

In this application, a design of different time periods in the first time period corresponds to a design of time domain resources for transmission of a sensing signal and/or an echo signal. Therefore, the design of different time periods in the first time period in this application may also be understood as a waveform design of the sensing signal and/or the echo signal.

S720: The first device sends the first signal in the second time period, and sends the second signal in the third time period.

Specifically, the first time period includes the second time period and the third time period, the second time period is used by the first device to send the first signal, the third time period is used by the first device to send the second signal, and the another time period in the first time period is used to carry the zero power signal, in other words, the first device does not send the first signal or the second signal in the another time period.

Correspondingly, a second device determines a first time period, where the first time period includes a second time period and a third time period, the second time period is used to send a first signal, the third time period is used to send a second signal, the second time period and the third time period are not contiguous to each other, a time domain length of the second time period and/or a time domain length of the third time period are/is less than a time domain length of a time domain symbol, and a time period other than the second time period and the third time period in the first time period is used to carry a zero power signal.

Specifically, the first time period includes the second time period and the third time period, the second time period is used by the second device to receive the first signal, the third time period is used by the second device to receive the second signal, and the another time period in the first time period is used to carry the zero power signal, in other words, the second device does not receive the first signal or the second signal in the another time period.

The first device and the second device are similar to the first device in the method 400. Details are not described herein again.

Both the first signal and the second signal are examples of sensing signals.

In this application, the first time period may be understood as a time domain length used by a sensing device for target sensing; and/or the first time period may be understood as a length of a time window or a length of a time period that may be used by the sensing device to send the sensing signal. A relationship between the first time period and the second time period may also be understood as that the sensing device may send the sensing signal in any part (the second time period) of the first time period; and/or the first time period may be understood as a time period that is not used to send a PDSCH and/or a PDCCH and/or a PBCH; and/or the first time period may be understood as a time period that is not used to receive a PUSCH and/or a PUCCH and/or a PRACH. The first time period may alternatively have another meaning. This is not limited in this application.

An example of a sensing signal applicable to the method 700 is provided below.

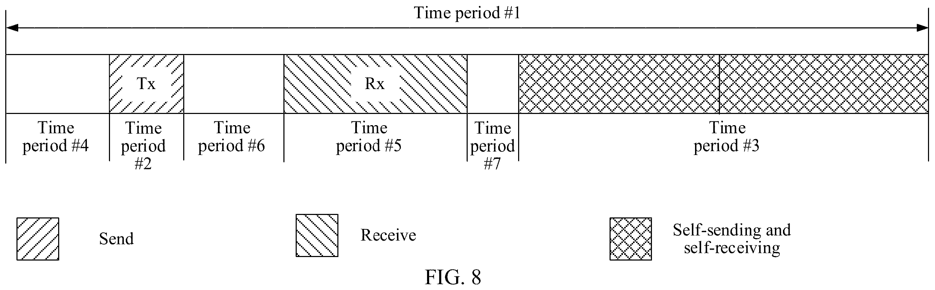

FIG. 8 is a diagram of a structure of a sensing signal according to an embodiment of this application. The structure may be used to operate in a scenario in which a half-duplex mode and a full-duplex mode are alternate.

First, the structure design of the sensing signal is described.

In FIG. 8, a time period #1 represents a first time period, a time period #2 represents a second time period, a time period #3 represents a third time period, a time period #4 represents a fourth time period, a time period #5 represents a fifth time period, a time period #6 represents a sixth time period, and a time period #7 represents a seventh time period.

In this application, the time period #1 includes the time period #2 and the time period #3. The time period #2 is used to send a first signal, and the time period #3 is used to send a second signal. In other words, the first device sends the first signal in the time period #2, and the first device sends the second signal in the time period #3. A time domain length of the time period #2 and/or a time domain length of the time period #3 is less than a time domain length of a time domain symbol.

Optionally, the second device receives the first signal in the time period #2, and receives the second signal in the time period #3.

A time period other than the time period #2 and the time period #3 in the time period #1 is used to carry a zero power signal. In other words, the first device does not send a signal in the time period other than the time period #2 and the time period #3 in the time period #1. In other words, the first device sends the first signal only in the time period #2 and the time period #3. In other words, the first device may send the first signal at a start moment of the time period #2, and the first device stops sending the first signal at an end moment of the time period #2. Similarly, the first device may send the second signal at a start moment of the time period #3, and the first device stops sending the second signal at an end moment of the time period #3.

In this application, the time period #2 and the time period #3 are not contiguous in time domain, the time period #3 is after the time period #2 in time domain, and the time domain length of the time period #3 is greater than the time domain length of the time period #2.

In a possible implementation, the time domain length of the time period #2 is greater than or equal to a first value.

The time period #2 is a time domain resource for sending the sensing signal in the first time period. A longer time domain length for sending the sensing signal indicates stronger accumulated energy of the sensing signal in time domain and better sensing performance. Therefore, a lower limit of the time domain length of the second time period needs to be properly designed. For different coverage areas of the sensing signal, different lower duration limits of the second time period may be designed. The following provides some design examples of time domain duration of the time period #2.

For example, the first value may be a product of 1024 and a time domain length of a first time unit.

During specific implementation, the first value may alternatively be another value. The foregoing is merely an example for description, and is not limited herein.

In this example, the time domain length of the time period #2 is at least greater than or equal to the product of 1024 and the time domain length of the first time unit. This can ensure that the coverage area of the sensing signal reaches about 1000 meters.

In this application, an example in which the time domain length of the first time unit is $1/(4096*480*1000)$ second is used. Details are not described below again.

In a possible implementation, the time domain length of the time period #2 is less than or equal to a second value.

It should be noted that, in the half-duplex mode, because an echo signal cannot be received in the time period #2, an echo signal generated by a short-distance target cannot be received. As a result, the short-distance target cannot be detected, and a detection blind area is generated. Therefore, the length of the time period #2 should not be excessively long, so as to ensure that the short-distance detection blind area is not excessively large. For different coverage areas of the sensing signal, different upper duration limits of the second time period may be designed. The following provides some upper limit designs of the time domain duration of the time period #2.

For example, the second value may be a product of 4096 and the time domain length of the first time unit.

It may be understood that the time domain length of the time period #2 is at least less than or equal to the product of 4096 and the time domain length of the first time unit. This can ensure that the coverage blind area of the first signal is not excessively large (for example, the blind area is less than about 500 meters).

For example, the time domain length of the time period #2 is equal to a product of 2048 and the time domain length of the first time unit, or the time domain length of the time period #2 may be the product of 4096 and the time domain length of the first time unit. In this case, the blind area is not excessively large (for example, the blind area is less than 500 meters) and a coverage area of a first signal is sufficient (for example, the blind area reaches 1000 meters).

In a possible implementation, the time domain length of the time period #3 is equal to a fifth value.

For example, the fifth value may be a product of 16384 and the time domain length of the first time unit.

It may be understood that the time domain length of the time period #3 is at least less than or equal to the product of 16384 and the time domain length of the first time unit. This can ensure that the coverage area of the second signal is sufficient. It should be understood that, in the time period #3, a sensing signal with a half-symbol cyclic prefix is used, and the sensing signals are sent and received in a full-duplex manner. Therefore, a detection range that can be supported by the second signal sent in the time period #3 is limited by the time domain length of the time period #3. When the time domain length of the time period #3 is equal to the product of 16384 and the time domain length of the first time unit, a range in which target detection can be performed through the second signal is 0 to 625 m. For the sensing signal of this application, because a long distance may be covered by using the first signal, the time period #3 does not need to be excessively large, and only needs to be greater than the coverage blind area of the first signal. Therefore, the time domain length of the time period #3 is at least less than or equal to the product of 16384 and the time domain length of the first time unit.

In this application, a time domain interval between an end time domain position of the time period #2 and a start time domain position of the time period #3 is greater than or equal to a sixth value.

For example, the sixth value may be a product of 6554 and the time domain length of the first time unit.

For example, if a transmission speed of a signal is $c=3*10^8$ m/s, and a maximum delay of the sensing signal is $(500/c*2)$s in a unit of $T_c$, the time domain interval between the end time domain position of the time period #2 and the start time domain position of the time period #3 should be greater than or equal to $\lceil 500/c*2/T_c \rceil * T_c$. Further, a time domain length of the interval between the end time domain position of the time period #2 and the start time domain position of the time period #3 is less than or equal to 6554 $T_c+T_{cp}$. In this case, the first signal may cover a range of at least 500 meters. It should be understood that, in this way, it can be ensured that overall overheads of the sensing symbol do not exceed two OFDM symbols whose subcarrier spacings are 120 kHz, so that subsequent PDSCH or PUSCH signal transmission is not affected.

For example, the sixth value may be a product of 13108 and the time domain length of the first time unit.

For example, if a transmission speed of a signal is $c=3*10^8$ m/s, and a maximum delay of the sensing signal is $(1000/c*2)$s in a unit of $T_c$, the time domain interval between the end position of the time period #2 and the start time domain position of the time period #3 should be greater than or equal to $\lceil 1000/c*2/T_c \rceil * T_c$. Further, a time domain length of the interval between the end position of the time period #2 and the start time domain position of the time period #3 is less than or equal to 13108 $T_c+T_{cp}$. In this case, the first signal may cover a range of at least 1000 meters. It should be understood that, in this way, it can be ensured that overall overheads of the sensing symbol do not exceed two OFDM symbols whose subcarrier spacings are 120 kHz, so that subsequent PDSCH or PUSCH signal transmission is not affected.

It should be noted that the first signal and the second signal each are arranged at an equal interval in frequency domain, and an interval in frequency domain corresponding to the first signal in the time period #2 is greater than an interval in frequency domain corresponding to the second signal in the time period #3.

For example, in the time period #2, the first signal presents an arrangement with an interval of one subcarrier in corresponding frequency domain, and in the time period #3, the second signal presents an arrangement with an interval of N subcarriers in corresponding frequency domain, where N is a positive integer greater than 1. For example, N may be equal to 2, 4, 8, 16, or the like.

Optionally, a start time domain position of the time period #2 is the same as a start time domain position of the time period #1. In other words, refer to FIG. 8. The time period #4 is an optional time period.

Optionally, the start time domain position of the time period #2 is different from the start time domain position of the time period #1. In other words, the start time domain position of the time period #2 and the start time domain position of the time period #1 are separated by a time period.

In this application, refer to FIG. 8. The start time domain position of the time period #2 and the start time domain position of the time period #1 are separated by the time period #4. It may be understood that a time domain length of the time period #4 is greater than 0.

In this application, the time period #4 is used to send or receive a zero power signal, in other words, the first device does not send a signal in the time period #4.

Optionally, the second device does not receive a signal in the time period #4.

In an optional understanding, the time period #4 is used by the first device to shield some interference when receiving a signal. For example, when the time period #1 is a first OFDM symbol, the interference may be an echo signal generated when a PDSCH signal on a previous OFDM symbol of the first OFDM symbol encounters a target object. It may be understood that delays and strengths of echo signals generated by target objects with different distances from the sensing device are different. An echo strength generated by a target object with a shorter distance is stronger, interference is larger, and a delay is smaller. Therefore, the second time period may be used to shield an echo signal with a short distance and strong interference. This helps improve detection performance.

Further, the first device may perform interference measurement in the time period #4 corresponding to the zero power signal. This facilitates subsequent processing on a received signal, for example, performing interference cancellation on the received signal.

In an optional understanding, an end time domain position of the time period #4 is before the start time domain position of the time period #2, and the time period #4 and the time period #2 are contiguous in time domain.

In an optional understanding, the time period #4 is before a moment t1 of the start time domain position of the time period #2. Optionally, for example, a start time domain position of the time period #4 is a moment t0, and the end time domain position of the time period #4 may overlap the start time domain position t1 of the time period #2.

In a possible implementation, the time domain length of the time period #4 is less than or equal to a third value.

The third value may be understood as that it is ensured that the time domain length of the time period #4 does not exceed one value, so as to ensure that the sensing signal can cover a sufficient sensing range.

For example, the third value may be a product of 9959 and the time domain length of the first time unit.

In an optional understanding, the time domain length of the time period #4 is less than or equal to the product of 9959 and the time domain length of the first time unit. This ensures that the first signal can cover at least about 500 meters when the time domain length of the time period #2 is less than or equal to the product of 2048 and the time domain length of the first time unit.

For another example, the third value may be a product of 3404 and the time domain length of the first time unit.

In an optional understanding, the time domain length of the time period #4 is less than or equal to the product of 3404 and the time domain length of the first time unit. This ensures that the first signal can cover at least about 1000 meters when the time domain length of the time period #2 is less than or equal to the product of 2048 and the time domain length of the first time unit.

For another example, the third value may be a product of 1356 and the time domain length of the first time unit.

In an optional understanding, the time domain length of the time period #4 is less than or equal to the product of 1356 and the time domain length of the first time unit. This ensures that the first signal can cover at least about 1000 meters when the time domain length of the time period #2 is less than or equal to the product of 4096 and the time domain length of the first time unit.

It should be understood that a value of the time domain length of the time period #4 in this embodiment is the same as the value of the time domain length of the time period #3 in the method 400. For specific examples of different coverage area scenarios, refer to the detailed descriptions in the method 400. Details are not described herein again.

Optionally, the time period #1 further includes the time period #6. The time period #6 is after the time period #2, the time period #6 and the time period #2 are contiguous in time domain, and a time domain length of the time period #6 is greater than 0.

In this application, the time period #6 is a guard interval in time domain, or the time period #6 is used to map a zero power signal. In other words, the first device does not send a signal in the time period #6. A start time domain position of the time period #6 is the same as the end time domain position of the time period #2.

In a possible implementation, the time domain length of the time period #6 is less than or equal to a fourth value.

For example, the fourth value is equal to a product of 1980 and the time domain length of the first time unit.

In this application, the guard interval in time domain may be understood as that the first device enables a transmit antenna or a transmit link in the guard interval; or the first device performs switching from a transmit link to a receive link in the guard interval.

In an optional understanding, when performing half-duplex switching, the network device needs to perform switching between transmit and receive antennas and disable a PA of the transmit link. However, there is a delay in disabling the PA of the transmit link, and the delay is mainly caused by a decrease of a power of the PA to a power requirement for disabling. Therefore, the guard interval needs to be set. In the guard interval, the power of the PA of the transmit link should be reduced to a tolerable level of a receiving device. Therefore, a problem that short-distance detection performance is affected because receive and transmit coupling interference caused by simultaneous receiving and sending (in other words, receiving of a signal and sending of a signal are simultaneously performed) exceeds a maximum level requirement of the receiving device is avoided.

In an optional understanding, the start time domain position of the time period #6 is after the end time domain position of the time period #2, and an end time domain position of the time period #6 is before the start time domain position of the time period #5.

In an optional understanding, for example, the time period #6 is between the moment t2 of the end time domain position of the time period #2 and the moment t3 of the start time domain position of the time period #4. Optionally, the start time domain position of the time period #6 may overlap the moment t2 of the end time domain position of the time period #2, and the end time domain position of the time period #6 may overlap the start time domain position t3 of the time period #4.

Optionally, the time period #1 further includes the time period #7. The time period #7 is before the time period #3, the time period #7 and the time period #3 are contiguous in time domain, and a time domain length of the time period #7 is greater than 0.

In this application, the time period #7 is a guard interval in time domain, or the time period #7 is used to map a zero power signal. In other words, the first device does not send a signal in the time period #7.

In a possible implementation, the time domain length of the time period #7 is less than or equal to a seventh value.

For example, the seventh value is equal to a product of 1980 and the time domain length of the first time unit.

It should be understood that in a design of a mixed sensing signal, the time period #7 originally used to send a cyclic prefix is used as a guard interval. An advantage of this practice is that: when being switched from a half-duplex mode to a full-duplex mode, the network device needs to be switched from a receiving-only state to a simultaneous receiving and sending state. Therefore, the transmit link needs to be enabled (including enabling of a transmit antenna and enabling of the PA of the transmit link), so that the guard interval needs to be set. In the guard interval, the power of the PA of the transmit link may be increased to a required transmit power level.

Optionally, the time period #1 may further include the time period #5. The first device receives a third signal in the time period #5.

It should be noted that the sensing signal is in a full-duplex mode in the time period #3, in other words, the first device may receive a fourth signal in the time period #3.

Correspondingly, the second device may receive the third signal or may not receive the third signal in the time period #5.

Similarly, the second device may receive the fourth signal or may not receive the fourth signal in the time period #3.

The third signal is an echo signal or a reflected signal of the first signal, the fourth signal is an echo signal or a reflected signal of the second signal, and the second signal and the fourth signal are used to sense a target. It may also be understood that the first signal and the third signal correspond to same data or a same signal sequence. For example, the first signal is a sensing signal sent by the network device, and is used to sense a target object, and the third signal is an echo signal corresponding to data or a signal sequence of the target object. In other words, the first signal is a signal that is sent by the network device and that is used to sense a target environment, and the third signal is a signal used to feed back a sensing result. That is, the first signal and the third signal correspond to the same target object or target environment. In other words, the first signal is a detection signal sent by the network device, and is used to detect a target object. The third signal is a feedback signal corresponding to the target object. The first signal and the third signal correspond to the same target object. A relationship between the second signal and the fourth signal is similar to that between the first signal and the third signal. Details are not described herein again.

The time period #2 is before the time period #5, and lengths of both the time period #2 and the time period #5 are less than the time domain length of the time period #1.

In an optional understanding, a start time domain position of the time period #5 is after the end time domain position of the time period #2. In other words, in the time period #1, only an operation of sending a signal is performed in a sending time period (the time period #2), and an operation of receiving a signal is performed in a time period (the time period #5) after the sending time period. The two time periods do not overlap and have a sequence, to be specific, an action of sending the signal is first performed (in the time period #2), and then an action of receiving the signal is performed (in the time period #5).

In an optional understanding, for example, a start time domain position of the time period #2 is a moment t1, the end time domain position of the time period #2 is a moment t2, the start time domain position of the time period #5 is a moment t3, an end time domain position of the time period #5 is a moment t4, the time period #2 is before the moment t3 of the start time domain position of the time period #5, t3 and t2 may overlap, that is, there is no time period #6, or t3 and t2 do not overlap, that is, there is the time period #6 between the time period #2 and the time period #5.

In an optional understanding, the start time domain position of the time period #6 is after the end time domain position of the time period #2, and an end time domain position of the time period #6 is before the start time domain position of the time period #5.

In an optional understanding, for example, the time period #6 is between the moment t2 of the end time domain position of the time period #2 and the moment t3 of the start time domain position of the time period #5. Optionally, the start time domain position of the time period #6 may overlap the moment t2 of the end time domain position of the time period #2, and the end time domain position of the time period #6 may overlap the start time domain position t3 of the time period #5.

In an optional understanding, the start time domain position of the time period #3 is the same as the end time domain position of the time period #5. In other words, refer to FIG. 8. The time period #7 in the time period #1 is an optional time period.

In an optional understanding, the start time domain position of the time period #3 is different from the end time domain position of the time period #5. In other words, the start time domain position of the time period #3 and the end time domain position of the time period #5 are separated by the time period #7.

It should be noted that the time period #1 includes at least the time period #2 and the time period #3. The first device sends the first signal in the time period #2, and the first device sends the second signal in the time period #3, and simultaneously receives the echo signal (or the reflected signal), that is, the fourth signal, of the second signal in the time period #3. Optionally, the echo signal (or the reflected signal), that is, the third signal, of the first signal is received in the time period #5. The time period #4, the time period #6, and the time period #7 are optional time periods. This is not limited in this embodiment of this application.

Specific steps of sending and receiving sensing signals in the half-duplex mode and the full-duplex mode in the mono-static sensing scenario are provided below.

a. A first device determines a first resource, where the first resource is used to carry a first signal.

Specifically, the first device maps the first signal to the first resource. The first resource corresponds to a time period #2 in a time period #1 in time domain.

b. The first device sends the first signal in the time period #2.

c. The first device receives a third signal in a time period #5, where the third signal is an echo signal of the first signal, and the third signal is used to detect a target.

d. The first device determines a second resource, where the second resource is used to carry a second signal.

Specifically, the first device maps the second signal to the second resource. The second resource corresponds to a time period #3 in the time period #1 in time domain.

e. The first device sends the second signal in the time period #3.

f. The first device receives a fourth signal in the time period #3, where the fourth signal is an echo signal of the second signal, and the fourth signal is used to detect a target.

Specific steps of sending and receiving sensing signals in the half-duplex mode and the full-duplex mode in the bi-static sensing scenario are provided below.

a. A first device determines a first resource, where the first resource is used to carry a first signal.

Specifically, the first device maps the first signal to the first resource. The first resource corresponds to a time period #2 in a time period #1 in time domain.

b. The first device sends the first signal in the time period #2.

c. A second device determines a first resource, where the first resource is used to carry a third signal, and the third signal is an echo signal or a reflected signal of the first signal.

d. A third device receives the third signal in a time period #5, where the third signal is used to detect a target.

e. The first device determines a second resource, where the second resource is used to carry a second signal.

Specifically, the first device maps the second signal to the second resource. The second resource corresponds to the time period #3 in the time period #1 in time domain.

f. The first device sends the second signal in the time period #3.

g. A third device determines a second resource, where the second resource is used to carry a fourth signal, and the fourth signal is an echo signal or a reflected signal of the second signal.

h. The third device receives the fourth signal in the time period #3, where the fourth signal is used to detect a target.

The foregoing steps of sending and receiving the sensing signals are merely an example for description. During actual implementation, another step may be further included. This is not limited in this embodiment of this application.

Based on the technical solution, a sensing signal in which half-duplex sensing and full-duplex sensing are alternate is used, a long-distance sensing capability may be provided in a half-duplex mode, and short-distance sensing coverage may also be provided in a full-duplex mode. Especially in the full-duplex mode, short-distance sensing is mainly provided. Therefore, transmission may be performed at a low transmit power without being limited by antenna isolation, so that when the antenna isolation is limited, a detection range and performance of detecting a long-distance target are improved, and non-blind area detection is implemented.

It may be understood that in this application, "first" and "second" are merely used for differentiation for ease of description, and are not used to limit the scope of embodiments of this application. For example, different information is distinguished.

It may be further understood that, some optional features in embodiments of this application may be independent of other features in some scenarios, or may be combined with other features in some scenarios. This is not limited.

It may be further understood that, solutions in embodiments of this application may be appropriately combined for use, and explanations or descriptions of terms in embodiments may be mutually referenced or explained in embodiments. This is not limited.

It may be further understood that, values of various numerical sequence numbers in embodiments of this application do not mean execution sequences, and are distinguished only for ease of description, and should not constitute any limitation on an implementation process of embodiments of this application.

It may be further understood that, in the foregoing method embodiments, methods and operations implemented by the device may alternatively be implemented by a component (for example, a chip or a circuit) of the device.

Corresponding to the methods provided in the foregoing method embodiments, embodiments of this application further provide corresponding apparatuses. The apparatus includes corresponding modules configured to perform the foregoing method embodiments. The module may be software, hardware, or a combination of software and hardware. It may be understood that the technical features described in the method embodiments are also applicable to the following apparatus embodiments.

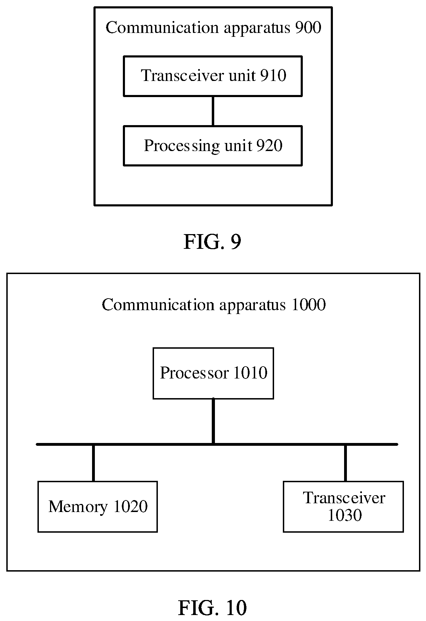

FIG. 9 is a diagram of a structure of a communication apparatus according to an embodiment of this application.

The apparatus 900 includes a transceiver unit 910 and a processing unit 920. The transceiver unit 910 may be configured to implement a corresponding communication function, and the processing unit 920 may be configured to perform data processing.

Optionally, the transceiver unit 910 may also be referred to as a communication interface or a communication unit, and includes a sending unit and/or a receiving unit. The transceiver unit 910 may be a transceiver (including a transmitter and/or a receiver), an input/output interface (including an input interface and/or an output interface), a pin, a circuit, or the like. The transceiver unit 910 may be configured to perform the sending step and/or the receiving step in the foregoing method embodiments.

Optionally, the processing unit 920 may be a processor (which may include one or more processors), a processing circuit having a processor function, or the like, and may be configured to perform a step other than sending and receiving in the foregoing method embodiments.

Optionally, the apparatus 900 further includes a storage unit. The storage unit may be a memory, an internal storage unit (for example, a register or a cache), an external storage unit (for example, a read-only memory or a random access memory), or the like. The storage unit is configured to store instructions, and the processing unit 920 executes the instructions stored in the storage unit, so that the communication apparatus performs the foregoing method.

In a design, the apparatus 900 may be configured to perform actions performed by the network device in the foregoing method embodiments. For example, the apparatus 900 may be configured to perform actions performed by the first device (the sensing device) in the foregoing method 400. In this case, the apparatus 900 may be a component of the first device. The transceiver unit 910 is configured to perform receiving and sending-related operations on the first device side in the foregoing method embodiments. The processing unit 920 is configured to perform a processing-related operation on the first device side in the foregoing method embodiments.

For example, the processing unit 920 is configured to determine a first time period, where the first time period includes a second time period, the second time period is used to send a first signal, a time domain length of the second time period is less than a time domain length of a time domain symbol, and a time period other than the second time period in the first time period is used to carry a zero power signal; and the transceiver unit 910 is configured to send the first signal in the second time period.

Optionally, the time domain length of the second time period is greater than or equal to a product of 1024 and a time domain length of a first time unit, and the time domain length of the second time period is less than or equal to a product of 4096 and the time domain length of the first time unit, where the time domain length of the first time unit is $1/(4096*480*1000)$ second.

Optionally, a start time domain position of the second time period is the same as a start time domain position of the first time period.

Optionally, a start time domain position of the second time period and a start time domain position of the first time period are separated by a third time period, and a time domain length of the third time period is greater than 0.

Optionally, the time domain length of the third time period is less than or equal to a product of 9959 and the time domain length of the first time unit; or the time domain length of the third time period is less than or equal to a product of 3404 and the time domain length of the first time unit; or the time domain length of the third time period is less than or equal to a product of 1356 and the time domain length of the first time unit, where the time domain length of the first time unit is $1/(4096*480*1000)$ second.

Optionally, a start time domain position of the fourth time period is the same as an end position of the second time period, or the start time domain position of the fourth time period and the end position of the second time period are separated by a fifth time period.

Optionally, a time domain length of the first time period is equal to a time domain length of a time domain symbol.

Optionally, the first time period is one time domain symbol.

It should be understood that the transceiver unit 910 and the processing unit 920 may further perform other operations performed by the first device (the sensing device) in any method in the foregoing method 400. Details are not described herein again.

For more detailed descriptions of the transceiver unit 910 and the processing unit 920, directly refer to the related descriptions in the method embodiments shown in FIG. 4 and FIG. 5. Details are not described herein.

In a design, the apparatus 900 may be configured to perform actions performed by the network device in the foregoing method embodiments. For example, the apparatus 900 may be configured to perform actions performed by the first device (the sensing device) in the foregoing method 700. In this case, the apparatus 900 may be a component of the first device. The transceiver unit 910 is configured to perform receiving and sending-related operations on the first device side in the foregoing method embodiments. The processing unit 920 is configured to perform a processing-related operation on the first device side in the foregoing method embodiments.

For example, the processing unit 920 is configured to determine a first time period, where the first time period includes a second time period and a third time period, the second time period is used to send a first signal, the third time period is used to send a second signal, the second time period and the third time period are not contiguous to each other, a time domain length of the second time period and/or a time domain length of the third time period are/is less than a time domain length of a time domain symbol, and a time period other than the second time period and the third time period in the first time period is used to carry a zero power signal; and the transceiver unit 910 is configured to send the first signal in the second time period, and send the second signal in the third time period.

Optionally, the length of the third time period is greater than the length of the second time period, and the third time period is after the second time period in time domain.

Optionally, the time domain length of the second time period is greater than or equal to a product of 1024 and a time domain length of a first time unit, and the time domain length of the second time period is less than or equal to a product of 4096 and the time domain length of the first time unit, where the time domain length of the first time unit is 1/(4096*480*1000) second.

Optionally, the time domain length of the third time period is equal to a product of 16384 and the time domain length of the first time unit, where the time domain length of the first time unit is 1/(4096*480*1000) second.

Optionally, a start time domain position of the second time period is the same as a start time domain position of the first time period.

Optionally, a start time domain position of the second time period and a start time domain position of the first time period are separated by a fourth time period, and a time domain length of the fourth time period is greater than 0.

Optionally, the length of the fourth time period is less than or equal to a product of 9959 and the time domain length of the first time unit; or the time domain length of the fourth time period is less than or equal to a product of 3404 and the time domain length of the first time unit; or the time domain length of the fourth time period is less than or equal to a product of 1356 and the time domain length of the first time unit, where the time domain length of the first time unit is 1/(4096*480*1000) second.

Optionally, a time domain interval between an end position of the second time period and a start time domain position of the third time period is greater than or equal to a product of 6554 and the time domain length of the first time unit, or the time domain interval between the end position of the second time period and the start time domain position of the third time period is greater than or equal to a product of 13108 and the time domain length of the first time unit, where the time domain length of the first time unit is 1/(4096*480*1000) second.

Optionally, the first signal presents an arrangement with an equal interval in frequency domain, the second signal presents an arrangement with an equal interval in frequency domain, and an interval in frequency domain of the first signal in the second time period is greater than an interval in frequency domain of the second signal in the third time period.

Optionally, the first time period further includes a fifth time period, the fifth time period is used to receive a third signal, the third time period is used to receive a fourth signal, the third signal is an echo signal or a reflected signal of the first signal, the fourth signal is an echo signal or a reflected signal of the second signal, and the third signal and the fourth signal are used to sense a target.

Optionally, a start time domain position of the fifth time period is the same as the end time domain position of the second time period, or the start time domain position of the fifth time period and the end time domain position of the second time period are separated by a sixth time period.

Optionally, the start time domain position of the third time period is the same as an end time domain position of the fifth time period, or the start time domain position of the third time period and the end time domain position of the fifth time period are separated by a seventh time period.

Optionally, a time domain length of the first time period is equal to a sum of time domain lengths of two time domain symbols.

Optionally, the first time period includes two time domain symbols.

It should be understood that the transceiver unit 910 and the processing unit 920 may further perform other operations performed by the first device (the sensing device) in any method in the foregoing method 700. Details are not described herein again.

For more detailed descriptions of the transceiver unit 910 and the processing unit 920, directly refer to the related descriptions in the method embodiments shown in FIG. 7 and FIG. 8. Details are not described herein.

In a design, the apparatus 900 may be configured to perform actions performed by the second device (the sensed target) in the foregoing method embodiments. The apparatus 900 may be a component of the second device. The transceiver unit 910 is configured to perform receiving and sending-related operations on the second device side in the foregoing method embodiments. The processing unit 920 is configured to perform a processing-related operation on the second device side in the foregoing method embodiments.

For example, the processing unit 920 is configured to determine a first time period, where the first time period includes a second time period, the second time period is used to receive a first signal, a time domain length of the second time period is less than a time domain length of a time domain symbol, and a time period other than the second time period in the first time period is used to carry a zero power signal; and the transceiver unit 910 is configured to receive the first signal in the second time period.

For another example, the processing unit 920 is configured to determine a first time period, where the first time period includes a second time period and a third time period, the second time period is used to receive a first signal, the third time period is used to receive a second signal, the second time period and the third time period are not contiguous to each other, a time domain length of the second time period and/or a time domain length of the third time period are/is less than a time domain length of a time domain symbol, and a time period other than the second time period and the third time period in the first time period is used to carry a zero power signal; and the transceiver unit 910 is configured to receive the first signal in the second time period, and receive the second signal in the third time period.

For specific details of the first time period in the foregoing solution performed on the second device side, refer to the first device side. Details are not described herein again.

It should be understood that the apparatus 900 herein is embodied in a form of functional unit. The term "unit" herein may be an application-specific integrated circuit (application specific integrated circuit, ASIC), an electronic circuit, a processor (for example, a shared processor, a special purpose processor, or a group processor) configured to execute one or more software or firmware programs, a memory, a merge logic circuit, and/or another suitable component that supports the described function. In an optional example, a person skilled in the art may understand that the apparatus 900 may be specifically the network device in the foregoing embodiments, and may be configured to perform procedures and/or steps corresponding to the network device in the foregoing method embodiments. To avoid repetition, details are not described herein again.

The apparatus 900 in each of the foregoing solutions has a function of implementing the corresponding steps performed by the first device in the foregoing method, or the apparatus 900 in each of the foregoing solutions has a function of implementing the corresponding steps performed by the second device in the foregoing method. The function may be implemented by hardware, or may be implemented by hardware by executing corresponding software. The hardware or software includes one or more modules corresponding to the foregoing functions. For example, the transceiver unit may be replaced with a transceiver (for example, a sending unit in the transceiver unit may be replaced with a transmitter, and a receiving unit in the transceiver unit may be replaced with a receiver), and another unit such as the processing unit may be replaced with a processor, to separately perform receiving and sending operations and a related processing operation in each method embodiment.

In addition, the transceiver unit 910 may alternatively be a transceiver circuit (for example, may include a receiver circuit and a transmitter circuit), and the processing unit may be a processing circuit.

It should be noted that the apparatus in FIG. 9 may be the network element or the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 10 is a diagram of a communication architecture according to an embodiment of this application. As shown in FIG. 10, a communication apparatus 1000 includes: a processor 1010, a memory 1020, and a transceiver 1030. The processor 1010 is coupled to the memory 1020, and is configured to execute instructions stored in the memory 1020, to control the transceiver 1030 to send a signal and/or receive a signal.

It should be understood that the processor 1010 and the memory 1020 may be integrated into one processing apparatus. The processor 1010 is configured to execute program code stored in the memory 1020 to implement the foregoing functions. During specific implementation, the memory 1020 may alternatively be integrated into the processor 1010, or may be independent of the processor 1010. It should be understood that the processor 1010 may alternatively correspond to each processing unit in the foregoing communication apparatus, and the transceiver 1030 may correspond to each receiving unit and each sending unit in the foregoing communication apparatus.

It should be further understood that the transceiver 1030 may include a receiver (or referred to as a receiving machine) and a transmitter (or referred to as a transmitting machine). The transceiver may further include an antenna, and there may be one or more antennas. The transceiver may alternatively be a communication interface or an interface circuit.

Specifically, the communication apparatus 1000 may correspond to the first device and the second device in the method 400 and the method 700 according to embodiments of this application. The communication apparatus 1000 may include units of the method performed by the first device in the method 400 and the method 700, or include units of the method performed by the second network device in the method 400 and the method 700. It should be understood that a specific process in which the units perform the foregoing corresponding steps is described in detail in the foregoing method embodiments, and for brevity, details are not described herein.

When the communication apparatus 1000 is a chip, the chip includes an interface unit and a processing unit. The interface unit may be an input/output circuit or a communication interface. The processing unit is a processor a microprocessor or an integrated circuit integrated on the chip.

In an implementation process, steps of the foregoing methods may be implemented by using an integrated logic circuit of hardware in the processor or instructions in a form of software. The steps of the methods disclosed with reference to embodiments of this application may be directly performed by a hardware processor, or may be performed by using a combination of hardware in the processor and a software module. A software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps of the foregoing method embodiments may be implemented by using an integrated logic circuit of hardware in the processor, or instructions in a form of software. The processor may be a general purpose processor, a digital signal processor (DSP), an application-specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general purpose processor may be a microprocessor, or the processor may be any conventional processor or the like. Steps of the methods disclosed with reference to embodiments of this application may be directly performed by a hardware decoding processor, or may be performed by using a combination of hardware and software modules in the decoding processor. A software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented.

All or a part of the foregoing embodiments may be implemented by software, hardware, firmware, or any combination thereof. When software is used to implement embodiments, all or a part of embodiments may be implemented in a form of a computer program product. The computer program product includes one or more computer instructions. When the computer instructions are loaded and executed on the computer, the procedures or functions according to embodiments of this application are all or partially generated. The computer may be a general-purpose computer, a dedicated computer, a computer network, or any other programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state disk (solid-state drive, SSD)), or the like.

In embodiments of this application, the word "example" or "for example" is used to represent giving an example, an illustration, or a description. Any embodiment or design solution described as an "example" in this application should not be explained as being more preferred or having more advantages than another embodiment or design solution. Exactly, the word "for example" is used to present a concept in a specific manner.

It should be understood that "an embodiment" mentioned in the whole specification does not mean that particular features, structures, or characteristics related to the embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application. Names of all nodes and messages in this application are merely names set for ease of description in this application, and may be different in an actual network. It should not be understood that names of various nodes and messages are limited in this application. On the contrary, any name that has a function that is the same as or similar to that of the node or the message used in this application is considered as a method or an equivalent replacement in this application.

It should further be understood that, in this application, "when" and "if" mean that UE or a base station performs corresponding processing in an objective situation, but do not constitute any limitation on time, do not require the UE or the base station to perform a determining action during implementation, and do not mean other limitations either.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists.

The term "at least one of..." in this specification represents all or any combination of the listed items. For example, "at least one of A, B, and C" may represent the following six cases: Only A exists, only B exists, only C exists, both A and B exist, both B and C exist, and A, B, and C all exist. In this specification, "at least one" means one or more. "A plurality of" means two or more.

It should be understood that in embodiments of this application, "B corresponding to A" indicates that B is associated with A, and B may be determined according to A. However, it should be further understood that determining B based on A does not mean that B is determined based only on A. B may alternatively be determined based on A and/or other information. The terms "include", "have", and their variants all mean "include but are not limited to", unless otherwise specifically emphasized in another manner.

It should be understood that, in various embodiments of this application, first, second, and various numbers are merely for distinguishing for ease of description. For example, different information is distinguished.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a computer software product. The software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

**Claims**

1. An integrated sensing and communication method (400), comprising:

   determining (S410) a first time period, wherein a time domain length of the first time period is equal to a time domain length of a time domain symbol, the time domain symbol is an orthogonal frequency division multiplexing, OFDM, symbol or an OFDM symbol including a cyclic prefix, the first time period comprises a second time period, the second time period is used to send a first signal, a time domain length of the second time period is less than the time domain length of the time domain symbol, and a time period other than the second time period in the first time period is used to carry a zero power signal; and
   sending (S420) the first signal in the second time period;
   wherein a start time domain position of the second time period and a start time domain position of the first time period are separated by a third time period, and a time domain length of the third time period is greater than 0; and
   wherein the first time period comprises a fourth time period, the fourth time period is used to receive a second signal, the second signal is an echo signal or a reflected signal of the first signal, and the second signal is used to sense a target (220).

2. The method (400) according to claim 1, wherein the time domain length of the second time period is greater than or equal to a product of 1024 and a time domain length of a first time unit, and the time domain length of the second time period is less than or equal to a product of 4096 and the time domain length of the first time unit, wherein the time domain length of the first time unit is 1/(4096*480*1000) second.

3. The method (400) according to claim 1 or 2, wherein the time domain length of the third time period is less than or equal to a product of 9959 and the time domain length of the first time unit; or the time domain length of the third time period is less than or equal to a product of 3404 and the time domain length of the first time unit; or the time domain length of the third time period is less than or equal to a product of 1356 and the time domain length of the first time unit, wherein the time domain length of the first time unit is 1/(4096*480* 1000) second.

4. The method (400) according to any one of the preceding claims, wherein a start time domain position of the fourth time period is the same as an end time domain position of the second time period, or the start time domain position of the fourth time period and the end time domain position of the second time period are separated by a fifth time period.

5. An integrated sensing and communication method, comprising:

   determining a first time period, wherein a time domain length of the first time period is equal to a time domain length of a time domain symbol, the time domain symbol is an orthogonal frequency division multiplexing, OFDM, symbol or an OFDM symbol including a cyclic prefix, the first time period comprises a second time period, the second time period is used to receive a first signal, a time domain length of the second time period is less than the time domain length of the time domain symbol, and a time period other than the second time period in the first time period is used to carry a zero power signal; and
   receiving the first signal in the second time period;
   wherein a start time domain position of the second time period and a start time domain position of the first time period are separated by a third time period, and a time domain length of the third time period is greater than 0; and
   wherein the first time period comprises a fourth time period, the fourth time period is used to receive a second signal, the second signal is an echo signal or a reflected signal of the first signal, and the second signal is used to sense a target (220).

6. The method according to claim 5, wherein the time domain length of the second time period is greater than or equal to a product of 1024 and a time domain length of a first time unit, and the time domain length of the second time period is less than or equal to a product of 4096 and the time domain length of the first time unit, wherein the time domain length of the first time unit is 1/(4096*480*1000) second.

7. The method according to claim 5 or 6, wherein the time domain length of the third time period is less than or equal to a product of 9959 and the time domain length of the first time unit; or the time domain length of the third time period is less than or equal to a product of 3404 and the time domain length of the first time unit; or the time domain length of the third time period is less than or equal to a product of 1356 and the time domain length of the first time unit, wherein the time domain length of the first time unit is 1/(4096*480*1000) second.

8. The method according to any one of claims 5 to 7, wherein a start time domain position of the fourth time period is the same as an end time domain position of the second time period, or the start time domain position of the fourth time period and the end time domain position of the second time period are separated by a fifth time period.

9. A communication apparatus, configured to perform the method (400) according to any one of claims 1 to 4, or configured to perform the method according to any one of claims 5 to 8.

10. A computer-readable storage medium, wherein the computer-readable storage medium stores computer instructions, and when the computer instructions are run on a computer, the method according to any one of claims 1 to 4 is performed, or the method according to any one of claims 5 to 8 is performed.

11. A computer program product, wherein when the computer program product runs on a computer, the computer is enabled to perform the steps of the method according to any one of claims 1 to 4, or perform the steps of the method according to any one of claims 5 to 8.

**Patentansprüche**

1. Integriertes Erfassungs- und Kommunikationsverfahren (400), umfassend:

   Bestimmen (S410) einer ersten Zeitperiode, wobei eine Zeitbereichslänge der ersten Zeitperiode gleich einer Zeitbereichslänge eines Zeitbereichssymbols ist, das Zeitbereichssymbol ein Orthogonal Frequency Division Multiplexing-, OFDM-, Symbol oder ein OFDM-Symbol, das ein zyklisches Präfix einschließt, die erste Zeitperiode eine zweite Zeitperiode umfasst, die zweite Zeitperiode zum Senden eines ersten Signals verwendet wird, eine Zeitbereichslänge der zweiten Zeitperiode kleiner als die Zeitbereichslänge des Zeitbereichssymbols ist und eine Zeitperiode innerhalb der ersten Zeitperiode außer der zweiten Zeitperiode zum Tragen eines Nullleistungssignals verwendet wird; und
Senden (S420) des ersten Signals in der zweiten Zeitperiode;
wobei eine Startzeitbereichsposition der zweiten Zeitperiode und eine Startzeitbereichsposition der ersten Zeitperiode durch eine dritte Zeitperiode getrennt sind und eine Zeitbereichslänge der dritten Zeitperiode größer als 0 ist; und
wobei die erste Zeitperiode eine vierte Zeitperiode umfasst, die vierte Zeitperiode zum Empfangen eines zweiten Signals verwendet wird, das zweite Signal ein Echosignal oder ein reflektiertes Signal des ersten Signals ist und das zweite Signal zum Erfassen eines Ziels (220) verwendet wird.

2. Verfahren (400) nach Anspruch 1, wobei die Zeitbereichslänge der zweiten Zeitperiode größer als oder gleich einem Produkt aus 1024 und einer Zeitbereichslänge einer ersten Zeiteinheit ist und die Zeitbereichslänge der zweiten Zeitperiode kleiner als oder gleich einem Produkt aus 4096 und der Zeitbereichslänge der ersten Zeiteinheit ist, wobei die Zeitbereichslänge der ersten Zeiteinheit 1/(4096*480*1000) Sekunden beträgt.

3. Verfahren (400) nach Anspruch 1 oder 2, wobei die Zeitbereichslänge der dritten Zeitperiode kleiner als oder gleich einem Produkt aus 9959 und der Zeitbereichslänge der ersten Zeiteinheit ist; oder die Zeitbereichslänge der dritten Zeitperiode kleiner als oder gleich einem Produkt aus 3404 und der Zeitbereichslänge der ersten Zeiteinheit ist; oder die Zeitbereichslänge der dritten Zeitperiode kleiner als oder gleich einem Produkt aus 1356 und der Zeitbereichslänge der ersten Zeiteinheit ist, wobei die Zeitbereichslänge der ersten Zeiteinheit 1/(4096*480*1000) Sekunden beträgt.

4. Verfahren (400) nach einem der vorhergehenden Ansprüche, wobei eine Startzeitbereichsposition der vierten Zeitperiode die gleiche wie eine Endzeitbereichsposition der zweiten Zeitperiode ist oder die Startzeitbereichsposition der vierten Zeitperiode und die Endzeitbereichsposition der zweiten Zeitperiode durch eine fünfte Zeitperiode getrennt sind.

5. Integriertes Erfassungs- und Kommunikationsverfahren, umfassend:

Bestimmen einer ersten Zeitperiode, wobei eine Zeitbereichslänge der ersten Zeitperiode gleich einer Zeitbereichslänge eines Zeitbereichssymbols ist, das Zeitbereichssymbol ein Orthogonal Frequency Division Multiplexing-, OFDM-, Symbol oder ein OFDM-Symbol, das ein zyklisches Präfix einschließt, die erste Zeitperiode eine zweite Zeitperiode umfasst, die zweite Zeitperiode zum Senden eines ersten Signals verwendet wird, eine Zeitbereichslänge der zweiten Zeitperiode kleiner als die Zeitbereichslänge des Zeitbereichssymbols ist und eine Zeitperiode innerhalb der ersten Zeitperiode außer der zweiten Zeitperiode zum Tragen eines Nullleistungssignals verwendet wird; und
Empfangen des ersten Signals in der zweiten Zeitperiode;
wobei eine Startzeitbereichsposition der zweiten Zeitperiode und eine Startzeitbereichsposition der ersten Zeitperiode durch eine dritte Zeitperiode getrennt sind und eine Zeitbereichslänge der dritten Zeitperiode größer als 0 ist; und
wobei die erste Zeitperiode eine vierte Zeitperiode umfasst, die vierte Zeitperiode zum Empfangen eines zweiten Signals verwendet wird, das zweite Signal ein Echosignal oder ein reflektiertes Signal des ersten Signals ist und das zweite Signal zum Erfassen eines Ziels (220) verwendet wird.

6. Verfahren nach Anspruch 5, wobei die Zeitbereichslänge der zweiten Zeitperiode größer als oder gleich einem Produkt aus 1024 und einer Zeitbereichslänge einer ersten Zeiteinheit ist und die Zeitbereichslänge der zweiten Zeitperiode kleiner als oder gleich einem Produkt aus 4096 und der Zeitbereichslänge der ersten Zeiteinheit ist, wobei die Zeitbereichslänge der ersten Zeiteinheit 1/(4096*480*1000) Sekunden beträgt.

7. Verfahren nach Anspruch 5 oder 6, wobei die Zeitbereichslänge der dritten Zeitperiode kleiner als oder gleich einem Produkt aus 9959 und der Zeitbereichslänge der ersten Zeiteinheit ist; oder die Zeitbereichslänge der dritten Zeitperiode kleiner als oder gleich einem Produkt aus 3404 und der Zeitbereichslänge der ersten Zeiteinheit ist; oder die Zeitbereichslänge der dritten Zeitperiode kleiner als oder gleich einem Produkt aus 1356 und der Zeitbereichslänge der ersten Zeiteinheit ist, wobei die Zeitbereichslänge der ersten Zeiteinheit 1/(4096*480*1000) Sekunden beträgt.

8. Verfahren nach einem der Ansprüche 5 bis 7, wobei eine Startzeitbereichsposition der vierten Zeitperiode die gleiche wie eine Endzeitbereichsposition der zweiten Zeitperiode ist oder die Startzeitbereichsposition der vierten Zeitperiode und die Endzeitbereichsposition der zweiten Zeitperiode durch eine fünfte Zeitperiode getrennt sind.

9. Kommunikationsvorrichtung, die konfiguriert ist, um das Verfahren (400) nach einem der Ansprüche 1 bis 4 durchzuführen, oder konfiguriert ist, um das Verfahren nach einem der Ansprüche 5 bis 8 durchzuführen.

10. Computerlesbares Speichermedium, wobei das computerlesbare Speichermedium Computeranweisungen speichert und, wenn die Computeranweisungen auf einem Computer vorgenommen werden, das Verfahren nach einem der Ansprüche 1 bis 4 durchgeführt wird oder das Verfahren nach einem der Ansprüche 5 bis 8 durchgeführt wird.

11. Computerprogrammprodukt, wobei, wenn das Computerprogrammprodukt auf einem Computer vorgenommen wird, es dem Computer ermöglicht wird, die Schritte des Verfahrens nach einem der Ansprüche 1 bis 4 durchzuführen oder die Schritte des Verfahrens nach einem der Ansprüche 5 bis 8 durchzuführen.

**Revendications**

1. Procédé de détection et communication intégrées (400), comprenant :

la détermination (S410) d'une première période de temps, dans lequel une longueur de domaine de temps de la première période de temps est égale à une longueur de domaine de temps d'un symbole de domaine de temps, le symbole de domaine de temps est un symbole de multiplexage par répartition orthogonale de la fréquence, OFDM, ou un symbole OFDM comportant un préfixe cyclique, la première période de temps comprend une deuxième période de temps, la deuxième période de temps est utilisée pour envoyer un premier signal, une longueur de domaine de temps de la deuxième période de temps est inférieure à la longueur de domaine de temps du symbole de domaine de temps, et une période de temps autre que la deuxième période de temps dans la première période de temps est utilisée pour transporter un signal de puissance nulle ; et
l'envoi (S420) du premier signal dans la deuxième période de temps ;
dans lequel une position de domaine de temps de début de la deuxième période de temps et une position de domaine de temps de début de la première période de temps sont séparées par une troisième période de temps, et une longueur de domaine de temps de la troisième période de temps est supérieure à 0 ; et

dans lequel la première période de temps comprend une quatrième période de temps, la quatrième période de temps est utilisée pour recevoir un second signal, le second signal est un signal d'écho ou un signal réfléchi du premier signal, et le second signal est utilisé pour détecter une cible (220).

2. Procédé (400) selon la revendication 1, dans lequel la longueur de domaine de temps de la deuxième période de temps est supérieure ou égale à un produit de 1024 et une longueur de domaine de temps d'une première unité de temps, et la longueur de domaine de temps de la deuxième période de temps est inférieure ou égale à un produit de 4096 et la longueur de domaine de temps de la première unité de temps, dans lequel la longueur de domaine de temps de la première unité de temps est 1/(4096*480*1000) seconde.

3. Procédé (400) selon la revendication 1 ou 2, dans lequel la longueur de domaine de temps de la troisième période de temps est inférieure ou égale à un produit de 9959 et la longueur de domaine de temps de la première unité de temps ; ou la longueur de domaine de temps de la troisième période de temps est inférieure ou égale à un produit de 3404 et la longueur de domaine de temps de la première unité de temps ; ou la longueur de domaine de temps de la troisième période de temps est inférieure ou égale à un produit de 1356 et la longueur de domaine de temps de la première unité de temps, dans lequel la longueur de domaine de temps de la première unité de temps est 1/(4096*480*1000) seconde.

4. Procédé (400) selon l'une quelconque des revendications précédentes, dans lequel une position de domaine de temps de début de la quatrième période de temps est la même qu'une position de domaine de temps de fin de la deuxième période de temps, ou la position de domaine de temps de début de la quatrième période de temps et la position de domaine de temps de début de la deuxième période de temps sont séparées par une cinquième période de temps.

5. Procédé de détection et de communication intégrées, comprenant :

la détermination d'une première période de temps, dans lequel une longueur de domaine de temps de la première période de temps est égale à une longueur de domaine de temps d'un symbole de domaine de temps, le symbole de domaine de temps est un symbole de multiplexage par répartition orthogonale de la fréquence, OFDM, ou un symbole OFDM comportant un préfixe cyclique, la première période de temps comprend une deuxième période de temps, la deuxième période de temps est utilisée pour recevoir un premier signal, une longueur de domaine de temps de la deuxième période de temps est inférieure à la longueur de domaine de temps du symbole de domaine de temps, et une période de temps autre que la deuxième période de temps dans la première période de temps est utilisée pour transporter un signal de puissance nulle ; et

la réception du premier signal dans la deuxième période de temps ;

dans lequel une position de domaine de temps de début de la deuxième période de temps et une position de domaine de temps de début de la première période de temps sont séparées par une troisième période de temps, et une longueur de domaine de temps de la troisième période de temps est supérieure à 0 ; et

dans lequel la première période de temps comprend une quatrième période de temps, la quatrième période de temps est utilisée pour recevoir un second signal, le second signal est un signal d'écho ou un signal réfléchi du premier signal, et le second signal est utilisé pour détecter une cible (220).

6. Procédé selon la revendication 5, dans lequel la longueur de domaine de temps de la deuxième période de temps est supérieure ou égale à un produit de 1024 et une longueur de domaine de temps d'une première unité de temps, et la longueur de domaine de temps de la deuxième période de temps est inférieure ou égale à un produit de 4096 et la longueur de domaine de temps de la première unité de temps, dans lequel la longueur de domaine de temps de la première unité de temps est 1/(4096*480*1000) seconde.

7. Procédé selon la revendication 5 ou 6, dans lequel la longueur de domaine de temps de la troisième période de temps est inférieure ou égale à un produit de 9959 et la longueur de domaine de temps de la première unité de temps ; ou la longueur de domaine de temps de la troisième période de temps est inférieure ou égale à un produit de 3404 et la longueur de domaine de temps de la première unité de temps ; ou la longueur de domaine de temps de la troisième période de temps est inférieure ou égale à un produit de 1356 et la longueur de domaine de temps de la première unité de temps, dans lequel la longueur de domaine de temps de la première unité de temps est 1/(4096*480*1000) seconde.

8. Procédé selon l'une quelconque des revendications 5 à 7, dans lequel une position de domaine de temps de début de la quatrième période de temps est la même qu'une position de domaine de fin de la deuxième période de temps, ou la position de domaine de temps de début de la quatrième période de temps et la position de domaine de temps de fin de la deuxième période de temps sont séparées par une cinquième période de temps.

9. Appareil de communication, configuré pour réaliser le procédé (400) selon l'une quelconque des revendications 1 à 4, ou configuré pour réaliser le procédé selon l'une quelconque des revendications 5 à 8.

10. Support de stockage lisible par ordinateur, dans lequel le support de stockage lisible par ordinateur stocke des instructions, et lorsque les instructions informatiques sont exécutées sur un ordinateur, le procédé selon l'une quelconque des revendications 1 à 4 est réalisé, ou le procédé selon l'une quelconque des revendications 5 à 8 est réalisé.

11. Produit de programme informatique, dans lequel lorsque le produit de programme informatique fonctionne sur un ordinateur, l'ordinateur est activé pour réaliser les étapes du procédé selon l'une quelconque des revendications 1 à 4 ou réaliser les étapes du procédé selon l'une quelconque des revendications 5 à 8.

System 100

Network
device 110

Sensing
signal

Sensed
target 120

(a)

Network
device 110

Sensing
signal

Communication
device 130

Sensed
target 120

(b)

FIG. 1

EP 4 529 329 B1

System 200

Network
device 210

Network
device 240

Sensing
signal

Sensing
signal

Sensed
target 220

(a)

Network
device 210

Network
device 240

Sensing
signal

Sensing
signal

Communication
device 230

Sensed
target 220

(b)

FIG. 2

Arrangement with comb 2 in frequency domain, a CP with a
length of a half-OS in time domain

Half-symbol cyclic prefix

Duplex-self-sending
and self-receiving

FIG. 3

Method 400 — S410

A first device determines a first time period, where the first time
period includes a second time period, the second time period is
used to send a first signal, a time domain length of the second
time period is less than a time domain length of one time domain
symbol, and a time period other than the second time period in
the first time period is used to carry a zero power signal

The first device sends the first signal in the second time period — S420

FIG. 4

Time period #1

Tx

Time
period
#2

(a)

Time period #1

Tx

Time
period
#3

Time
period
#2

(b)

Time period #1

Tx

Time
period
#2

Time
period
#5

(c)

Time period #1

Tx

Time
period
#3

Time
period
#2

Time
period
#5

(d)

Send

Receive

FIG. 5

Time period #1

| Tx | Rx |
|---|---|
| Time period #2 | Time period #4 |

(a)

Time period #1

| | Tx | Rx |
|---|---|---|
| Time period #3 | Time period #2 | Time period #4 |

(b)

Time period #1

| Tx | | Rx |
|---|---|---|
| Time period #2 | Time period #5 | Time period #4 |

(c)

Time period #1

| | Tx | | Rx |
|---|---|---|---|
| Time period #3 | Time period #2 | Time period #5 | Time period #4 |

(d)

▨ Send          ▨ Receive

## FIG. 6

Method 700

A first device determines a first time period, where the first time period includes a second time period and a third time period, the second time period is used to send a first signal, the third time period is used to send a second signal, and a time period other than the second time period and the third time period in the first time period is used to carry a zero power signal ⟋ S710

The first device sends the first signal in the second time period, and the first device sends the second signal in the third time period ⟋ S720

## FIG. 7

Time period #1

| | Tx | | Rx | | | |
|---|---|---|---|---|---|---|
| Time period #4 | Time period #2 | Time period #6 | Time period #5 | Time period #7 | Time period #3 | |

Send          Receive          Self-sending and self-receiving

FIG. 8

EP 4 529 329 B1

Communication apparatus 900

Transceiver unit 910

Processing unit 920

**FIG. 9**

Communication apparatus 1000

Processor 1010

Memory 1020

Transceiver 1030

**FIG. 10**

EP 4 529 329 B1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. H. DOKHANCHI et al.** A half-duplex joint communications and sensing system using ZP-OFDM. *IEEE Int. Symposium on Joint Communications and Sensing*, March 2022, 1-6

- **F. LIU et al.** Joint radar and communication design: Applications, state-of-the-art, and the road ahead. *IEEE Transactions on Communications*, June 2020, vol. 68 (6), 3834-3862